(19) Europäisches Patentamt
European Patent Office
Office européen des brevets

(11) EP 1 710 283 B1

# (12) EUROPÄISCHE PATENTSCHRIFT

(45) Veröffentlichungstag und Bekanntmachung des Hinweises auf die Patenterteilung:
**29.07.2015 Patentblatt 2015/31**

(51) Int Cl.:
***C09D 5/00*** *(2006.01)* ***C08F 8/44*** *(2006.01)*
***C09D 201/02*** *(2006.01)* ***B05D 7/00*** *(2006.01)*

(21) Anmeldenummer: **06007066.1**

(22) Anmeldetag: **03.04.2006**

(54) **Verfahren zur Erzeugung festhaftender Beschichtungen auf Oberflächen**

Method for producing adherent coatings to surfaces

Méthode pour produire des revêtements adhérent sur des surfaces

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **04.04.2005 EP 05007306**

(43) Veröffentlichungstag der Anmeldung:
**11.10.2006 Patentblatt 2006/41**

(73) Patentinhaber: **Deutsches Wollforschungsinstitut an der Rheinisch-Westfälischen Technischen Hochschule Aachen e.V.**
**52062 Aachen (DE)**

(72) Erfinder:
- **Möller, Martin**
  **52070 Aachen (DE)**
- **Beginn, Uwe**
  **4731 Eynatten (BE)**
- **Keul, Helmut**
  **52074 Aachen (DE)**
- **Thomas, Helga**
  **52134 Herzogenrath (DE)**

(74) Vertreter: **Reitstötter Kinzebach**
**Patentanwälte**
**Sternwartstrasse 4**
**81679 München (DE)**

(56) Entgegenhaltungen:
**WO-A-01/44383**
**WO-A-03/048215**
**DE-C1- 3 626 662**
**US-A- 5 503 938**
**US-A1- 2001 056 156**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 710 283 B1

Printed by Jouve, 75001 PARIS (FR)

## Beschreibung

Die dauerhafte Funktionalisierung von Materialoberflächen ist für eine Vielzahl von Materialien und Anwendungen von Bedeutung. Es ist bekannt, die Oberfläche verschiedener organischer und anorganischer Substrate mit synthetischen Polymeren zu beschichten, um den Oberflächen verschiedene erwünschte Eigenschaften zu verleihen, wie Haftvermögen, Hydrophilie oder Hydrophobie, geringe Reibung, Beständigkeit gegen Umwelteinflüsse, Biokompatibilität und dergleichen. Das dabei auftretende Hauptproblem ist die üblicherweise geringe und nicht dauerhafte Haftung zwischen dem organischen Polymer und den davon verschiedenen Substraten, wie Metall, Glas, Keramik und dergleichen.

Die Modifikation einer Oberfläche kann entweder reaktiv durch Ausbildung kovalenter Bindungen oder durch Chemisorption bzw. Adsorption erfolgen. Ein häufig angewandtes Verfahren zum Einführen funktionaler Gruppen an Oberflächen bedient sich der Beschichtung mit funktionalen Silanen, insbesondere Aminosilanen. Die Behandlung mit Aminosilanen ist technisch aufwändig und kann nicht aus wässriger Lösung erfolgen. Ein weiteres Verfahren ist die Elektropfropfung. Ihre Anwendung ist auf elektrisch leitende Substrate beschränkt.

WO 01/44383 beschreibt ein Polymer (A), das mehrere quaternäre Ammoniumgruppen und weitere funktionelle Gruppen (nämlich Carbamatgruppen) trägt. Dieses Polymer findet Verwendung in einem Elektrotauchlack, der zur Grundierung von Substraten verwendet wird. Der Tauchlack enthält zwingend ein Vernetzungsmittel (C), dessen reaktive Gruppen gegenüber den Carbamatgruppen des Polymers (A) reaktiv sind.

Es besteht ein Bedarf nach einem einfach durchzuführenden Verfahren zur Erzeugung festhaftender Beschichtungen auf Oberflächen.

Die Erfindung betrifft ein Verfahren zur Erzeugung festhaftender Beschichtungen auf Oberflächen, bei dem man

a) eine Oberfläche mit einem polymeren Primer behandelt, wobei der Primer im Molekül mehrere quaternäre Ammoniumgruppen und gleichzeitig mehrere funktionelle Gruppen X enthält, die ausgewählt sind unter (i) ethylenisch ungesättigten Gruppen, und (ii) funktionellen Gruppen, die zur Reaktion mit Molekülen mit komplementär reaktiven Gruppen befähigt sind; und

b) die behandelte Oberfläche unter Bedingungen einer Polymerisations- und/oder Kupplungsreaktion mit ethylenisch ungesättigten Verbindungen und/oder Verbindungen mit gegenüber den funktionellen Gruppen komplementär reaktiven Gruppen behandelt.

Die Begriffe "funktionelle Gruppe" und "komplementär reaktive Gruppe" sind dem Fachmann vertraut und bezeichnen Gruppen, die unter bestimmten Reaktionsbedingungen unter Ausbildung kovalenter Bindungen spezifisch miteinander reagieren können. Bei einer "funktionellen Gruppe" und der "komplementär reaktiven Gruppe" kann es sich auf um eine gleichartige Gruppe handeln, wenn diese eine Polyreaktion eingehen kann, wie z. B. die kationische Polyaddition von Epoxygruppen.

Zu den funktionellen Gruppen, die zur Reaktion mit Verbindungen mit komplementär reaktiven Gruppen befähigt sind, zählen vor allem primäre und sekundäre Aminogruppen, Hydroxylgruppen, Carboxylgruppen, Epoxygruppen, Isocyanatgruppen und Carbonatgruppen. Davon sind Carboxyl-, Epoxy-, Isocyanat- und Carbonatgruppen bevorzugt. Geeignete Carbonatgruppen sind insbesondere 2-Oxo-[1,3]dioxacycloalkylgruppen mit 5- bis 7-gliedrigem Ring (im Folgenden auch als "cyclische Carbonatgruppen" bezeichnet), wie die 2-Oxo-[1,3]dioxolan-4-yl-Gruppe, oder Aryloxycarbonyloxygruppen, wie die Phenyloxycarbonyloxygruppe.

Die ausgezeichnete Haftung des Primers auf der Oberfläche beruht auf ionischen Wechselwirkungen zwischen negativen Oberflächenladungen und den kationischen Ammoniumgruppen. Durch die Kooperativität der vielfachen Ionenpaarbildung entsteht eine sehr starke Bindung, die selbst bei hohen Ionenstärken und extremen pH-Werten stabil ist.

Der Schritt b) des erfindungsgemäßen Verfahrens kann sofort im Anschluss an den Schritt a) ausgeführt werden. Es ist aber ein besonderer Vorteil der Erfindung, dass der Schritt b) räumlich und zeitlich völlig unabhängig vom Schritt a) erfolgen kann. Dies bedeutet insbesondere, dass die Primer-behandelten Oberflächen gelagert und/oder transportiert werden können, bevor der Schritt b) erfolgt.

Durch den Schritt b) werden der Oberfläche spezifische Eigenschaften verliehen, die von der Natur der angewendeten Modifikatoren abhängen. Es ist ein besonderer Vorteil der Erfindung, dass eine sehr große Zahl von Modifikatoren mit den Primer-behandelten Oberflächen umgesetzt werden kann, so dass die physikalischen und chemischen Eigenschaften der ursprünglichen Oberfläche in einem weiten Bereich variiert werden können.

Es ist ein besonderer Vorteil des Verfahrens, dass eine zweistufige Verstärkung der Oberflächenfunktionalitäten eintritt. Die Adsorption des Primer - Makromoleküls stellt an der Oberfläche mehr anbindungsfähige funktionelle Gruppen zur Verfügung als zuvor Oberflächenladungen vorhanden waren und die nachfolgende Aufpolymerisation fixiert eine große Anzahl funktioneller Einheiten pro reaktiver Gruppe des Primer-Makromoleküls. Somit können wirksame, fest haftende Beschichtungen auch auf solche Oberflächen aufgebracht werden, die aufgrund ihrer geringen Ladungsdichte

mit herkömmlichen Verfahren nicht wirksam modifizierbar sind. Der Verstärkungsfaktor lässt sich gemäß Gleichung 1 abschätzen.

$$\text{Gl. 1:} \quad f = N_r \cdot f_{pa} \cdot \langle X_n \rangle / N_0$$

(f = Verstärkungsfaktor, $N_r$ = Zahl der polymerisationsaktiven Gruppen des Primer-Makromoleküls, $f_{pa}$ = Anteil der polymerisationsaktiven Gruppen des Primer-Makromoleküls die in Stufe 2 tatsächlich aktiviert wurden, $N_0$ = Zahl der Oberflächenladungen des Substrates, die von einem Primer-Makromolekül überdeckt werden, $\langle X_n \rangle$ = Zahlenmittel des Polymerisationsgrades der in Schritt b) aufpolymerisierten Polymerketten).

Bei einer bevorzugten Ausführungsformen von Schritt b) behandelt man die Oberfläche unter den Bedingungen einer radikalischen oder kationischen Polymerisation mit ethylenisch ungesättigten Monomeren, wobei man an der Oberfläche fixierte Polymere erhält.

Bei einer anderen bevorzugten Ausführungsformen von Schritt b) behandelt man die Oberfläche unter den Bedingungen einer Polyadditions- oder -kondensationsreaktion mit Monomeren, die über gegenüber den funktionellen Gruppen komplementär reaktive Gruppen verfügen, wobei man an der Oberfläche fixierte Polymere erhält.

Eine weitere bevorzugte Ausführungsform von Schritt b) betrifft die Kupplung von Oligomeren oder Polymeren, die gegenüber den funktionellen Gruppen komplementär reaktive Gruppen aufweisen. Die komplementär reaktiven Gruppen können als Endgruppen oder Seitengruppen im Oligomer oder Polymer vorliegen, z. B. ausschließlich als Endgruppe an einem Molekülende.

Geeignet für das Verfahren ist jede beliebige Oberfläche, die intrinsisch anionische Gruppen oder Gruppen mit negativen Partialladungen trägt, welche auf Kationen anziehend wirken.

Geeignete anionische Gruppen sind die Anionen von Säuren, deren $pK_a$-Wert kleiner als der $pK_a$ von Wasser ist. Dazu gehören: Carboxylat ($-COO^-$), Sulfat ($-OSO_3^-$), Sulfonat ($-SO_3^-$), Phosphat ($[-OPO(OH)_{2-m}O_m]^{m-}$, m=1,2), Phosphonat ($[-PO(OH)_{2-m}O_m]^{m-}$, m=1,2), Phenolat ($-PhO^-$)

Zu den Gruppen mit negativen Partialladungen gehören: Hydroxy (-OH), Carbonyl (-CO-), Amino ($-NR_1R_2$), Thiol (-SH), Thio- und Dithiocarbonsäuren (-CSOH, -CS-SH, -CO-SH), Amidine (-CNR-OR, $-CNR_1-OR_2$), Ester (-CO-OR), Kohlenstoff- und Siliziumether (C-O-C, Si-O-Si).

Oberflächen, die derartige Gruppierungen nicht enthalten, werden durch Coronaplasmaverfahren oder durch Oxidation mittels $UV/O_2$, Ozon oder anodischer Oxidation mit geeigneten Gruppierungen, insbesondere Carboxylat, Carbonyl- und Hydroxygruppen versehen.

Als Substratmaterialien kommen in Frage:

(i) Bei Gebrauchstemperatur feste Elemente, insbesondere Metalle wie Al, Mg, Fe, Ti oder Kohlenstoff, und alle festen Elemente mit Oxidschichten an der Oberfläche wie z. B. $Si/SiO_x$, $Fe/FeO_x$, Halbleiter der IV Hauptgruppe und III/V Halbleiter usw.

(ii) Oxidische Oberflächen wie Glas, Quarz, Metalloxide (z. B. $B_2O_3$, $Al_2O_3$, $SiO_2$, $Fe_xO_y$), Keramiken, phosphatiertes Eisen, Gestein, Ziegel, Beton.

(iii) Nitridische und boridische Oberflächen.

(iv) Synthetische und natürliche Hochpolymere, wie Proteine, Polysaccharide, Polyolefine, Polyester, Polyamide, Polystyrole, schlagzäh modifizierte Polystyrole.

Das Verfahren ist sowohl anwendbar auf glatte Oberflächen (Platten, Filme, Folien, Formkörper), als auch auf raue oder aufgeraute Oberflächen (Fasern, Bruchflächen), sowie Pulver. Das Verfahren ist insbesondere auch auf textile Fasern anwendbar, wie solche aus Wolle, Baumwolle, Seide, Kunstseide, Polyester, Polyamid; und technische Fasern wie Glasfasern oder Carbonfasern.

Der erfindungsgemäß verwendete Primer enthält mehrere quaternäre Ammoniumgruppen im Molekül, vorzugsweise durchschnittlich wenigstens 5, insbesondere durchschnittlich wenigstens 10 quaternäre Ammoniumgruppen im Molekül. Die durchschnittliche Zahl von quaternären Ammoniumgruppen im Molekül lässt sich z. B. anhand des durchschnittlichen Polymerisationsgrades (Zahl der Wiederholungseinheiten) des Primers und des Substitutionsgrades mit quaternären Ammoniumgruppen berechnen.

Der erfindungsgemäß verwendete Primer enthält mehrere Gruppen X im Molekül, vorzugsweise durchschnittlich wenigstens 5, insbesondere durchschnittlich wenigstens 10 Gruppen X im Molekül. Die durchschnittliche Zahl von Gruppen X im Molekül lässt sich z. B. anhand des durchschnittlichen Polymerisationsgrades (Zahl der Wiederholungseinheiten) des Primers und des Substitutionsgrades mit Gruppen X berechnen.

Der erfindungsgemäß verwendete Primer kann auf verschiedene Weise hergestellt werden, z. B. durch Copolymerisation von Monomeren, die geeignete Seitengruppen tragen. Da aber die Variabilität solcher funktionellen Seitengruppen beschränkt ist, deren Anwesenheit beispielsweise eine radikalische oder kationische Polymerisation nicht beeinträchtigt, erhält man den Primer vorzugsweise durch geeignete Modifizierung eines Primerbasispolymers.

Zweckmäßigerweise ist der Primer daher erhalten durch Umsetzung eines Primerbasispolymers, das über primäre und/oder sekundäre Aminogruppen, Carboxylgruppen und/oder Hydroxylgruppen verfügt, mit einem ersten Derivatisierungsreagenz zur Einführung quaternärer Ammoniumgruppen und gegebenenfalls einem zweiten Derivatisierungsreagenz zur Einführung der Gruppen X. Die Umsetzung mit dem ersten bzw. zweiten Derivatisierungsreagenz kann in beliebiger Reihenfolge oder gleichzeitig in einer Eintopfreaktion erfolgen. Bei der Umsetzung handelt es sich um eine polymeranaloge Reaktion. Der Substitutionsgrad mit quaternären Ammoniumgruppen bzw. mit Gruppen X im Umsetzungsprodukt lässt sich durch Wahl des stöchiometrischen Verhältnisses der Amino-, Carboxyl- und/oder Hydroxygruppen zum Derivatisierungsreagenz einstellen.

Die Umsetzungen mit dem ersten und zweiten Derivatisierungsreagenz erfolgen in einem geeigneten Lösungsmittel bei einer Temperatur und einem pH, die die angestrebte Umsetzung fördern und bei denen keine wesentlichen Nebenreaktionen stattfinden. Im Einzelfall kann die Anwendung eines Katalysators, insbesondere eines basischen Katalysators angebracht sein. Der Fachmann kann geeignete Bedingungen ohne Weiteres ermitteln.

Das Primerbasispolymer weist vorzugsweise ein gewichtsmittleres Molekulargewicht von 200 bis 500000 Dalton, insbesondere 5000 bis 50000 Dalton auf.

Als Primerbasispolymer eignen sich Polyamine, z. B. Chitosan, Polyallylamin, Poly-(ethylenimin) oder Poly(vinylamin).

Weiterhin eignen sich z.B. Poly(meth)acrylsäure, Copolymere mit hydrolysierten Maleinsäure- und Itaconsäureanhydrid-Gruppen, Polyvinylalkohol, Polyhydroxyalkyl-(meth)acrylate, -Stärke, Cellulose, (hochverzweigtes) Polyglycerin und dergleichen.

Das erste Derivatisierungsreagenz weist wenigstens eine quaternäre Ammoniumgruppe und wenigstens eine Ankergruppe zur Kupplung an das Primerbasispolymer auf. Ersichtlich ist jede Ammoniumgruppe von einem Äquivalent eines Anions $A^-$ begleitet. Typische Anionen $A^-$ sind Halogenide, wie Chlorid, Bromid, Iodid, Sulfat, Methylsulfat, Sulfonate, wie Methylsulfonat, p-Toluolsulfonat, Trifluormethylsulfonat, und dergleichen. Die Ankergruppe kann mit den primären und/oder sekundären Aminogruppen, Carboxylgruppen und/oder Hydroxylgruppen unter Ausbildung einer kovalenten Bindung reagieren. Geeignete Ankergruppen sind Halogenacylgruppen, Halogenatome (die vorzugsweise an ein primäres Kohlenstoffatom gebunden sind), Epoxygruppen, (Meth)acrylgruppen, Carbonatgruppen, Vinylsulfongruppen, und dergleichen. Geeignete Carbonatgruppen sind insbesondere 2-Oxo-[1,3]dioxacycloalkylgruppen mit 5- bis 7-gliedrigem Ring, wie die 2-Oxo-[1,3]dioxolan-4-yl-Gruppe, oder Aryloxycarbonyloxygruppen, wie die Phenyloxycarbonyloxygruppe. Davon sind 2-Oxo-[1,3]dioxolan-4-yl-Gruppen, Epoxygruppen und Vinylsulfongruppen besonders bevorzugt.

Ein bevorzugtes erstes Derivatisierungsreagenz weist die Formel I auf

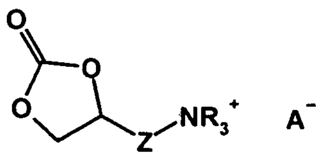

I

worin Z für $C_1$-$C_{12}$-Alkylen oder $C_1$-$C_{12}$-Alkylen-O-CO-NH-$C_2$-$C_{12}$-Alkylen steht, R unabhängig voneinander für eine $C_1$-$C_6$-Alkyl- oder eine Benzylgruppe steht und A- für ein Anion steht. Dieses Reagenz reagiert selektiv mit primären Aminogruppen in wässrigem oder organischem Medium gemäß dem nachstehenden Schema (In diesen und den folgenden Schemata steht P---P für einen Ausschnitt aus dem Gerüst des Primerbasispolymers).

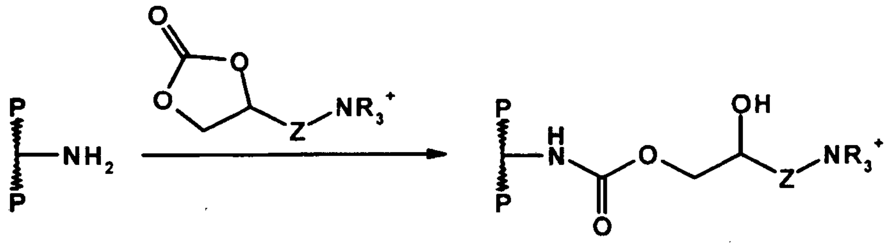

Im Speziellen werden Trimethyl-(2-oxo-[1,3]-dioxolan-4-yl-alkyl)-ammoniumhalogenide, z. B. Trimethyl-(2-oxo-[1,3]-dioxolan-4-yl-methyl)-ammoniumchlorid; oder Trimethyl-[3-(2-oxo-[1,3]dioxolan-4-yl-alkoxycarbonylamino)-alkyl]-ammoniumhalogenide, z. B. Trimethyl-[3-(2-oxo-[1,3]dioxolan-4-ylmethoxycarbonylamino)-propyl]-ammoniumchlorid, eingesetzt. Letztere sind in der europäischen Patentanmeldung EP 1 541 568 beschrieben.

Als erstes Derivatisierungsreagenz eignen sich weiterhin Verbindungen der Formel II oder III

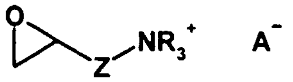

II

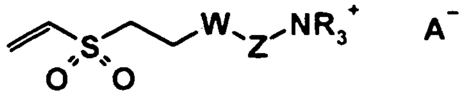

III

worin Z für $C_1$-$C_{12}$-Alkylen, W für O oder NH steht, R unabhängig voneinander für eine $C_1$-$C_6$-Alkyl- oder eine Benzylgruppe steht und $A^-$ für ein Anion steht.

Diese Verbindungen reagieren mit Hydroxylgruppen oder primären Aminogruppen gemäß den folgenden Schemata:

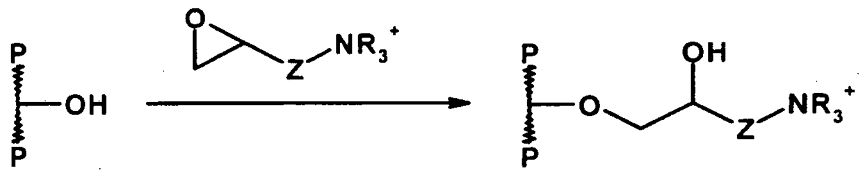

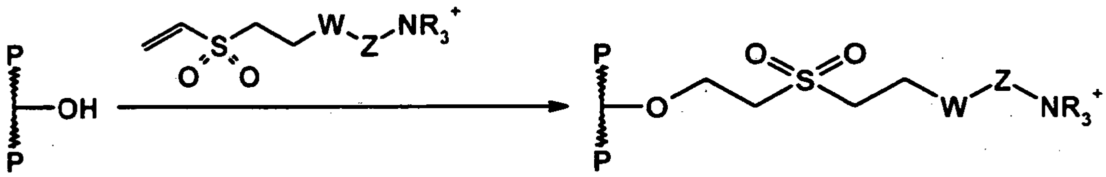

Im Speziellen werden N,N,N-Trimethyl-(ω-oxiranyl-alkyl)-ammonium-Verbindungen eingesetzt. Vorzugsweise wird N,N,N-Trimethyl-(oxiranyl-methyl)-ammoniumchlorid verwendet, welches unter der Bezeichnung QUAB 151 (Degussa) kommerziell erhältlich ist und dessen Herstellung in der BE 671687 beschrieben ist. Die Umsetzung von N,N,N-Trimethyl-(oxiranyl-methyl)-ammoniumchlorid mit Polyvinylalkohol kann nach der in der DE-A 3626662 oder EP-A 141269 angegebenen Methode erfolgen, die Umsetzung mit Stärke ist in der DE-A 3604796 und der US-A 3422087 beschrieben. Zur Umsetzung mit Cellulosepolymeren finden sich Beschreibungen in der EP-A 0812949.

Die Umsetzungen mit den Derivatisierungsreagenzien der Formeln I, II und II können vorteilhafterweise in wässrigem Medium durchgeführt werden.

Das zweite Derivatisierungsreagenz weist wenigstens eine Gruppe X oder eine Vorläufergruppe, die in eine Gruppe X umgewandelt werden kann, und wenigstens eine Ankergruppe zur Kupplung an das Primerbasispolymer auf. Geeignete Ankerguppen sind die oben in bezug auf das erste Derivatisierungsreagenz genannten.

In einer Ausführungsform handelt es sich bei den Gruppen X um ethylenisch ungesättigte Gruppen, vorzugsweise solche, die Methylidengruppen umfassen, wie Vinyl-, Vinylether-, Vinylsulfon- oder (Meth)acrylatgruppen.

Bevorzugte zweite Derivatisierungsreagenzien zur Einführung von ethylenisch ungesättigte Gruppen sind die folgenden. Diese Verbindungen reagieren bevorzugt mit primären Aminogruppen des Primerbasispolymers:

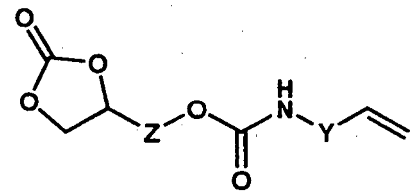
,
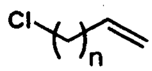
,
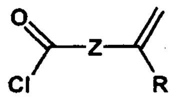

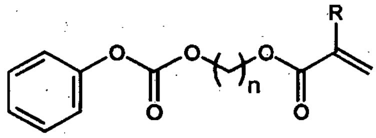
,
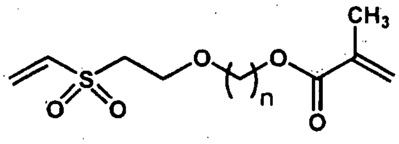

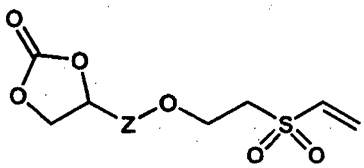

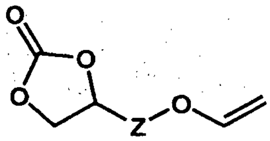

worin Y und Z unabhängig voneinander für $C_1$-$C_{12}$-Alkylen stehen, R für Wasserstoff oder Methyl steht und n für eine ganze Zahl von 1 bis 12 steht.

Folgende Verbindungen reagieren bevorzugt mit Hydroxylgruppen des Primerbasispolymers: Unter anderem ist die katalysierte Addition von Alkinen an Hydroxylgruppen möglich, die zur Bildung von Vinylethergruppen führt, sowie die Addition von Alkin-Alkenen, die Seitenketten mit terminalen Vinylgruppen erzeugen.

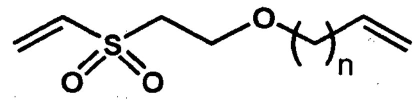
,
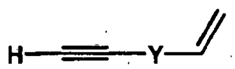

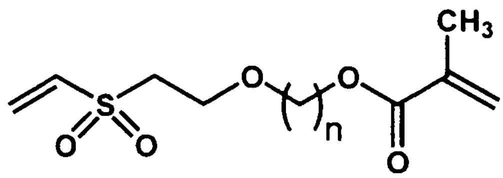
,

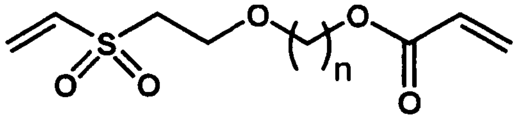

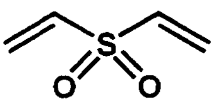

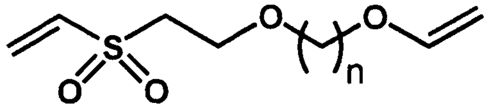
,
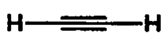

worin Y für $C_1$-$C_{12}$-Alkylen steht und n für eine ganze Zahl von 1 bis 12 steht.

Der besondere Vorteil dieser Derivatisierungsreagenzien liegt darin, dass die Umsetzungen in einem wässrigen Medium oder in Zweiphasensystemen mit einer wässrigen und einer nichtwässrigen Phase durchführbar sind, so dass

die Primer-Polymere gebrauchsfertig in wässrigem Medium erhalten werden.

Fakultativ kann man das mit dem ersten und zweiten Derivatisierungsreagenz umgesetzte Primerbasispolymer auch mit einem dritten Derivatisierungsreagenz umsetzen, das der Einführung von Initiatorgruppen in das Primermolekül dient. Die Anwesenheit der Initiatorgruppen im Primermolekül weist den Vorteil auf, das sich der Initiator in räumlicher Nähe zu den Gruppen X befindet, so dass die Polymerisation bei der späteren Umsetzung mit Monomeren bevorzugt unter Beteiligung der Oberflächengebundenen Gruppen X erfolgt und ein unerwünschter Polymerisationsstart an von der Oberfläche entfernten Stellen zurückgedrängt wird.

Das dritte Derivatisierungsreagenz weist wenigstens eine Ankergruppe zur Kupplung an das Primerbasispolymer und wenigstens eine Moleküleinheit auf, die als Photoinitiator oder thermischer Initiator, insbesondere als radikalischer Photoinitiator, thermischer Radikalinitiator oder kationischer Photoinitiator wirkt. Geeignete Ankergruppen sind die in Bezug auf das erste Derivatisierungsreagenz genannten.

Geeignete Initiatorgruppen sind solche, die bei Einwirkung von Energie, wie Licht und/oder Wärme, radikalische oder kationische Bruchstücke freisetzen. Hierzu zählen Gruppen mit Benzophenon-, Benzil-, α-Hydroxyalkylphenon-, α-Aminoalkylphenon-, Thioxanthen-9-on-, Peroxy-, Azo-, Sulfonium- oder Iodonium-Strukturelementen.

Nachstehend finden sich dritte Derivatisierungsreagenzien, die sich zur Einführung radikalischer Photoinitiatoren eignen:

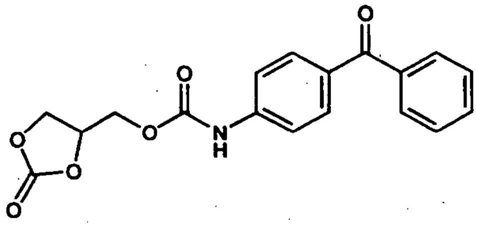
,
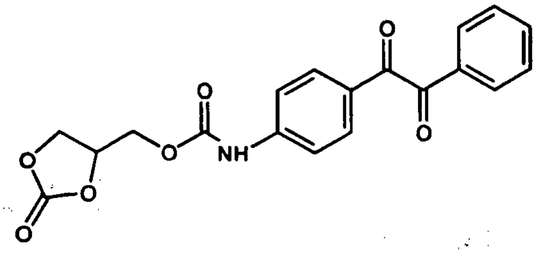

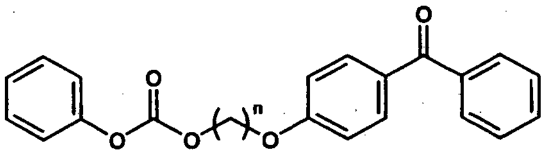

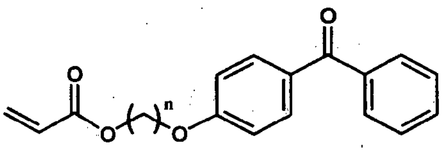
,
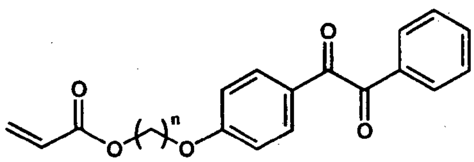

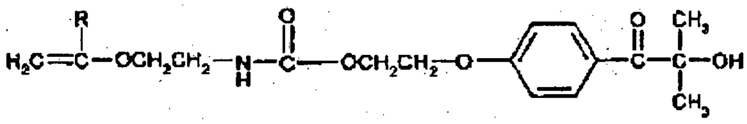
[1,2]

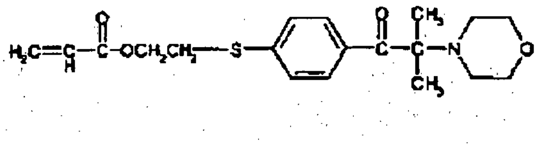
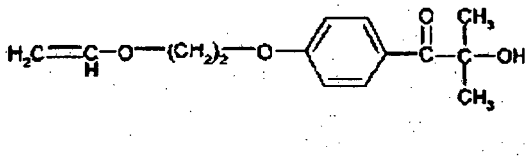
[1]

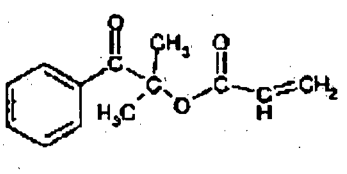

,

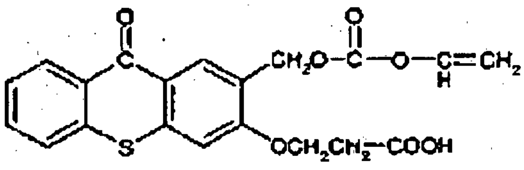

[1]

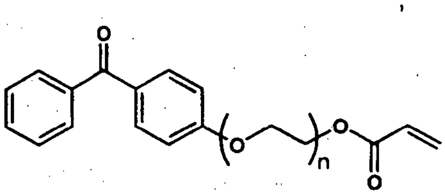

worin n für eine ganze Zahl von 1 bis 12 steht.

[1] WO 2004/056496 A2
[2] EP-A 377191

Nachstehend finden sich dritte Derivatisierungsreagenzien, die sich zur Einführung thermischer Radikalinitiatoren eignen:

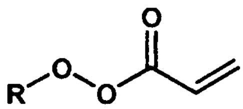

,

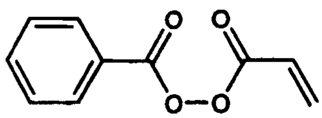

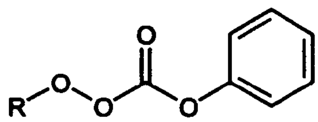

worin R für Wasserstoff, $C_1$-$C_{18}$-Alkyl oder Benzyl steht, vorzugsweise *tert.*-Butyl, Lauryl oder Benzyl.

Nachstehend finden sich dritte Derivatisierungsreagenzien, die sich zur Einführung kationischer Photoinitiatoren eignen:

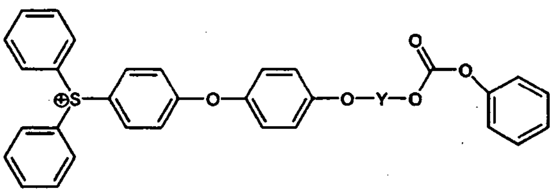

,

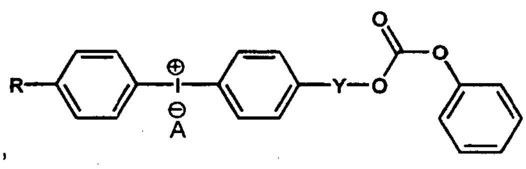

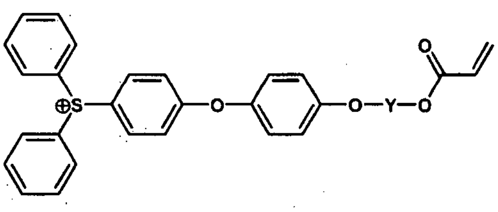

,

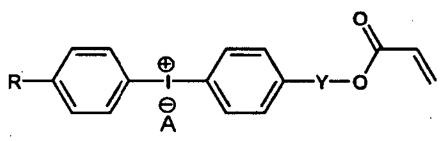

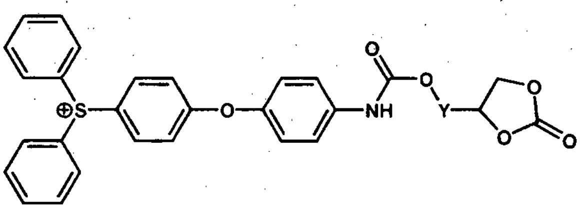

worin Y für Phenylen oder $C_1$-$C_{12}$-Alkylen, das gegebenenfalls von einer oder zwei Phenylengruppen flankiert und/oder

durch eine oder mehrere Phenylengruppen unterbrochen ist, steht. R steht für einen aliphatischen, aromatischen oder araliphatischen Rest wie Methyl, Ethyl, Phenyl oder Benzyl.

Wahlweise kann man auch Derivatisierungsregenzien mitverwenden, die der Einführung von detektierbaren Gruppen dienen, die sich als Sonden bzw. Markern eigenen. Die detektierbaren Gruppen gestatten z. B. eine einfache Kontrolle der Integrität oder Schichtdicke eines aufgebrachten Beschichtungsfilm. Als derartiges Derivatisierungsregenz eignet sich z. B. 4-Benzylaminocarbonyloxymethyl-2-oxo-[1,3]dioxolan, das aufgrund seines aromatischen Phenylrings leicht UV-spektroskopisch nachweisbar ist.

In einer anderen Ausführungsform handelt es sich bei den Gruppen X um funktionelle Gruppen, die zur Reaktion mit Molekülen mit komplementär reaktiven Gruppen befähigt sind. Hierzu zählen vor allem primäre und sekundäre Aminogruppen, Hydroxylgruppen, Carboxylgruppen, Epoxygruppen, Isocyanatgruppen und Carbonatgruppen, insbesondere 2-Oxo-[1,3]dioxacycloalkylgruppen mit 5- bis 7-gliedrigem Ring, wie die 2-Oxo-[1,3]dioxolan-4-yl-Gruppe, oder Aryloxycarbonyloxygruppen, wie die Phenyloxycarbonyloxygruppe.

Nicht umgesetzte Amino-, Hydroxyl- und/oder Carboxylgruppen des Primerbasismoleküls, die nach der Umsetzung mit dem ersten Derivatisierungsreagenz verblieben sind, sind an sich geeignete funktionelle Gruppen.

Die nicht umgesetzten Amino-, Hydroxyl- und/oder Carboxylgruppen des Primerbasismoleküls können darüber hinaus durch Umsetzung mit einem zweiten Derivatisierungsreagenz in weitere funktionelle Gruppen umgewandelt werden. Als zweites Derivatisierungsreagenz kommen in Betracht: Bisepoxyde, wie Bisphenol A-diglycidylether (zur Einführung von Epoxygruppen in das Primermolekül), Carbonsäureanhydride (zur Einführung von Carboxylgruppen in das Primermolekül), Dicarbonsäuren (zur Einführung von Carboxylgruppen in das Primermolekül), Diisocyanate wie Isophorondiisocyanat, Hexamethylendiisocyanat (zur Einführung von Isocyanatgruppen in das Primermolekül).

Ein besonders bevorzugtes zweites Derivatisierungsreagenz weist die Formel IV auf

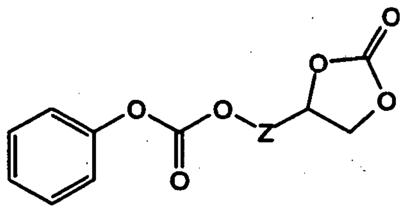

IV

worin Z für $C_1$-$C_{12}$-Alkylen steht; vgl. europäische Patentanmeldung Nr. 03028224.8; L. Ubaghs, N. Fricke, H. Keul, H. Hoecker, Macromol. Rapid Commun. 2004, 25, 517-521; J. F. G. A. Jansen, A. A. Dias, M. Dorschu, B. Coussens, Macromolecules 2003, 36(11), 3861-3873; EP-A 18259. Eine geeignete Verbindung der Formel IV ist {2-Oxo-[1,3] dioxolan-1-yl}methylkohlensäurephenylester.

Das Derivatisierungsreagenz der Formel IV reagiert gemäß folgendem Schema mit primären Aminogruppen des Primerbasispolymers, wobei cyclische Carbonatgruppen in das Primermolekül eingeführt werden:

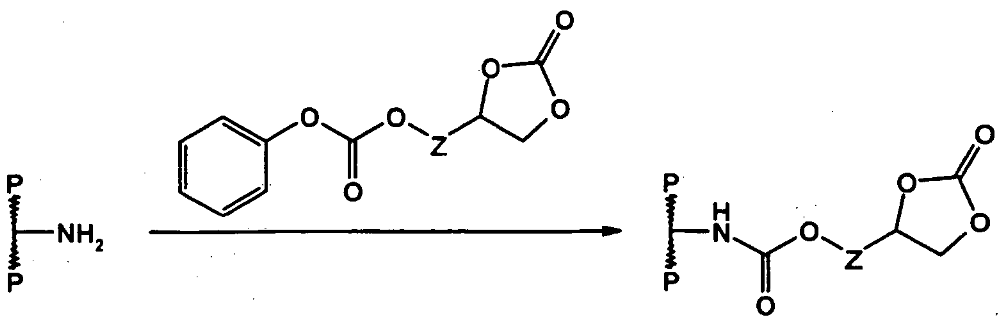

Ein weiteres besonders bevorzugtes zweites Derivatisierungsreagenz weist die Formel V auf

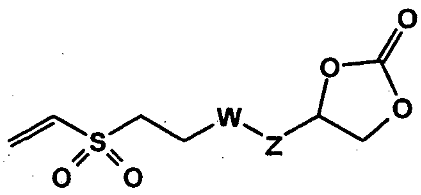

V

worin W für O oder NH steht und Z für $C_1$-$C_{12}$-Alkylen steht.

Das Derivatisierungsreagenz der Formel V reagiert gemäß folgendem Schema mit Hydroxylgruppen des Primerbasispolymers, wobei cyclische Carbonatgruppen in das Primermolekül eingeführt werden:

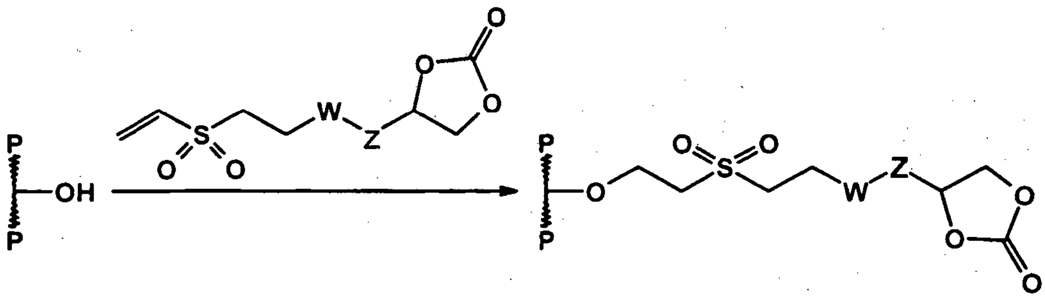

Primerbasispolymere mit Hydroxylgruppen, die wie oben beschrieben mit Epoxy-, Carbonsäure-, Isocyanat- oder Carbonatgruppen funktionalisiert wurden, können durch Reaktion mit einem großen Überschuss eines beliebigen Diamins in Amino-funktionale Primer umgewandelt werden. Mit den so erhaltenen Polymeren können weitere Reaktionen, Modifikationen und Umsetzungen durchgeführt werden.

Es ist weiterhin möglich, ein Primerbasispolymere mit Hydroxylgruppen zuerst mit einem Überschuss von Diphenylcarbonat umzusetzen, wodurch die Hydroxylgruppen in Phenylcarbonatgruppen umgewandelt werden.

Der polymere Primer wird auf die zu behandelnde Oberfläche aufgebracht. Zweckmäßigerweise bedient man sich einer Lösung des Primers in einem geeigneten Lösungsmittel, vorzugsweise einer wässrigen Lösung. Jedoch können andere Lösungsmittel, wie Alkohole, z. B. Methanol, Ethanol oder Isopropanol; Ketone, wie Aceton, verwendet werden. Das Aufbringen kann nach allen geeigneten Verfahren erfolgen, z. B. durch Eintauchen der Oberfläche in die Lösung, durch Auftrag der Lösung durch Sprühen, Bürsten und dergleichen. Beispielsweise können linien- oder bahnenförmige Gegenstände, wie Filamente, Fasern oder Folien, durch ein Tauchbad geführt werden. Ein Überschuss der Lösung kann abgestreift oder -gequetscht werden. Die Oberfläche kann im Anschluss an den Auftrag der Lösung getrocknet werden.

Vorzugsweise wird die Konzentration des polymeren Primers in der Lösung und/oder die aufgetragene Menge der Lösung so eingestellt, dass die Schichtdicke des polymeren Primers 50 nm nicht überschreitet. Von besonderem Interesse sind Schichten, deren Dicke 2 bis 40 nm, insbesondere 3 bis 12 nm beträgt.

Im Falle von Primern, die ethylenisch ungesättigte Gruppen tragen, kann zusammen mit dem Primer ein Polymerisationsinitiator aufgebracht werden.

In Fällen, in denen der Primer ethylenisch ungesättigte Gruppen enthält, kann die mit dem polymeren Primer behandelte Oberfläche im Schritt b) des erfindungsgemäßen Verfahrens unter Bedingungen einer Polymerisationsreaktion mit ethylenisch ungesättigten Verbindungen und/oder damit copolymerisierbaren Verbindungen behandelt werden. Der Begriff "ethylenisch ungesättigte Verbindung" umfasst ethylenisch ungesättigte niedermolekulare Monomere, Makromonomere und Gemische davon. Hierzu bringt man ethylenisch ungesättigte Verbindungen auf die behandelte Oberfläche auf und initiiert eine Polymerisation, insbesondere eine radikalische oder kationische Polymerisation. Das Aufbringen der ethylenisch ungesättigte Verbindungen kann lösungsmittelfrei durchgeführt werden.

Man kann die Polymerisation beispielsweise durch Temperaturerhöhung, Bestrahlung mit elektromagnetischen Wellen, insbesondere UV-Licht; Bestrahlung mit energiereichen Elementarteilchen oder Ionen, insbesondere Elektronenstrahlen; oder Eintrag von Ultraschall auslösen.

Bei der Polymerisation bilden sich "Polymerbürsten", die an der Oberfläche verankert sind, d. h. auf die Oberfläche gepfropft sind.

Für die Erfindung eigenen sich zur Beschichtung und nachfolgenden Polymerisation alle Monomere, die sich

radikalisch oder kationisch polymerisieren lassen und die bei Normaldruck nicht gasförmig vorliegen.

Im Besonderen sind die folgenden Monomere oder beliebige Gemische aus diesen Monomeren gut geeignet:

Radikalisch polymerisierbare Monomere sind insbesondere Vinylaromaten und N-Vinylheteroaromaten, wie Styrol und substituierte Styrole; (Meth)acrylsäure und Salze davon, (Meth)acrylsäureester, (Meth)acrylsäureamid und N-substituierte (Meth)acryl-säureamide, (Meth)acrylnitril; Itaconsäure und ihre Salze, Itaconsäureester; Itaconimid und N-substituierte Itaconimide, Itaconsäureanhydrid; Vinylester; N-Vinylpyrrolidon, N-Vinylcarbazol; Butadien und substituierte Butadiene; Vinylhalogenide; Vinylidencyanid; $\alpha$-Cyanacrylsäureester; $\alpha$-Halogenacrylsäureester; Methylenmalonester; Nitroethylen; Vinylencarbonat und $\alpha$-Cyansorbinsäureester.

Weiterhin sind Monomere geeignet, die nicht homopolymerisieren, sofern sie im Gemisch mit einem oder mehreren der oben aufgeführten Monomere eingesetzt werden. Dies sind insbesondere: Allylalkohol; Allylester; Allylhalogenide; Allylamin und N-substituierte Allylamine; Stilben; 1,2-Dichlorethylen; Maleinsäure und Salze der Maleinsäure; Maleinsäureester; Maleinsäureanhydrid; Maleimid und N-substituierte Maleimide.

Mit ethylenisch ungesättigten Gruppen kationisch copolymerisierbare Monomere sind insbesondere Vinylether; $\alpha$-Olefine; $\alpha$-Methylstyrol.

Als Makromonomere besonders geeignet sind: Oligomere oder Polymere mit ethylenisch ungesättigten Seitengruppen,wie Styryl-, (Meth)acryloyl-, Vinylether-, Vinylester- oder $\alpha$-Olefingruppen, sowie Oligomere oder Polymere, die durch ethylenisch ungesättigte Gruppen terminiert sind, wie Polyurethan(meth)acrylate oder Polyester(meth)acrylate.

Neben ethylenisch ungesättigten Verbindungen kann man die Primer-behandelten O-berflächen mit einer Vielzahl weiterer Verbindungen modifizieren. Die beteiligten Polymerisations- oder Kupplungsreaktionen bedürfen im Einzelfall geeigneter Katalysatoren und/oder Reaktionsbedingungen, die dem Fachmann der organischen Synthese geläufig sind.

In Fällen, in denen der Primer Epoxygruppen enthält, sind insbesondere folgende Monomere damit kationisch polymerisierbar: Oxirane; Oxethane; Oxolane; 1,3-Dioxolane; 1,3,5-Trioxan; Thiirane; Azirane; Aziridine; Thiethane; Azethane; Azethidine; Oxazoline; Hexamethylcyclotrisiloxan; Propiolacton.

In Fällen, in denen der Primer Amino-, Hydroxyl-, Carboxyl-, Epoxy- oder Carbonatgruppen enthält, eignen sich insbesondere die folgenden Monomersysteme, makromolekulare Bürstenstrukturen auf die behandelte Oberfläche durch Polykondensation oder Polyaddition aufwachsen zu lassen: Lactame, wie Caprolactam oder Laurylactam; Lactone, wie Caprolacton; Aminocarbonsäuren; Hydroxycarbonsäuren; Bis(epoxyde); Gemische aus Bis(epoxyden) und Diaminen; Gemische aus Bis(epoxyden) und Diolen; Gemische aus Bis(epoxyden) und Dicarbonsäuren oder Carbonsäureanhydriden; Gemische aus Dicarbonsäuren und Diaminen; Gemische aus Dicarbonsäuren und Diolen; Gemische aus Diisocyanaten und Diolen; Gemische aus Diisocyanaten und Diaminen; Gemische aus Diisocyanaten und Dicarbonsäuren; Gemische aus Verbindungen der obigen Formel IV und Diaminen.

Wenn es sich bei den funktionellen Gruppen am Primer um cyclische Carbonatgruppen handelt, so sind die folgenden Monomersysteme besonders wirksam: Gemische aus Bis(epoxyden) und Diaminen; Gemische aus Dicarbonsäuren und Diaminen; Gemische aus Diisocyanaten und Diaminen; Gemische aus Verbindungen der obigen Formel IV und Diaminen.

Wenn es sich bei den funktionellen Gruppen am Primer um Hydroxylgruppen handelt, dann sind die folgenden Monomersysteme zu verwenden: Bis(epoxyde); Gemische aus Bis(epoxyden) und Diaminen; Gemische aus Bis(epoxyden) und Diolen; Gemische aus Bis(epoxyden) und Dicarbonsäuren oder Carbonsäureanhydriden; Gemische aus Dicarbonsäuren und Diolen; Gemische aus Diisocyanaten und Diolen.

In einer weiteren Ausführungsform werden an funktionelle Gruppen des Primers Oligomere oder Polymere gekuppelt, die komplementär reaktive Gruppen aufweisen, z. B. als Seitengruppen oder terminale Gruppen an einem oder mehreren Molekülenden. Bevorzugte Oligomere oder Polymere sind Polyalkylenoxide oder Polysiloxane, die gegebenenfalls geeignet funktionalisiert sind.

In der folgenden Tabelle sind Paare wirksamer komplementärer funktioneller Gruppen zusammengestellt.

| funktionelle Gruppe am Primer | funktionelle Gruppe am Oligomer/Polymer |
|---|---|
| Vinylsulfon, $-SO_2-CH=CH_2$ | $H_2N$-, HNR- |
| | HS-, |
| | HO- |
| Acrylat, $-OOC-CH=CH_2$ | $H_2N$-, HNR- |
| | HS-, |
| | HO- |
| Amin, $-NH_2$ | cyclisches Carbonat, |
| | PhO-CO-O-, |

(fortgesetzt)

| funktionelle Gruppe am Primer | funktionelle Gruppe am Oligomer/Polymer |
|---|---|
| | OCN- |
| | HOOC-, Cl-OC-, |
| | $CH_2$=CH-COO- |
| | Cl-, Br- |
| Carboxy, -COOH | HO- |
| | $H_2N$- |
| Hydroxy, -OH | PhO-CO-O-, |
| | HOOC-, Cl-OC-, |
| | OCN- |
| | $CH_2$=CH-COO- |
| | Cl-, Br- |
| cyclisches Carbonat | $H_2N$- |

Im Speziellen sind die folgenden Kombinationen besonders wirksam:

(1) lineare Ethylenoxid-Propylenoxid-Copolymere, die an einem Molekülende eine primäre Aminogruppe tragen, auf Primer, die mit cyclischem Carbonat funktionalisiert sind.

(2) lineare Ethylenoxid-Propylenoxid-Copolymere und Polydimethylsiloxane, die an einem oder beiden Molekülenden eine Hydroxylgruppe tragen, auf Primer, die mit Vinylsulfongruppen funktionalisiert sind.

(3) lineare Polydimethylsiloxane, die an einem Molekülenden eine Epoxygruppe tragen, auf Primer mit Aminogruppen.

Liegt eine Primer-behandelte Oberfläche vor, auf der freie Amino- oder Hydroxygruppen am Primer vorhanden sind, dann sind im Sinne einer Additionsreaktion besonders solche Makromoleküle kovalent anbindbar, die wenigstens eine unter Epoxyd-, Isocyanat-, Acrylat-, Carbonat-, Phenyloxycarbonyloxy-, Säureanhydridgruppen ausgewählte Gruppe tragen.

Ganz besonders gut eignen sich hierfür: Homo- und Copolymere, die Glycidyl(meth)-acrylat enthalten, Homo- und Copolymere, die (2-Isocyanato-ethyl)(meth)acrylat ent-halten, Homo- und Copolymere, die (2-Phenoxycarbonyloxy-ethyl)(meth)acrylat enthalten, Copolymere, die Maleinsäureanhydrid enthalten, Homo- und Copolymere, die Itaconsäureanhydrid enthalten.

Liegt eine Primer-behandelte Oberfläche vor, auf der freie cyclische Carbonatfgruppen am Primer vorhanden sind, dann sind im Sinne einer Additionsreaktion besonders solche Makromoleküle kovalent anbindbar, die wenigstens eine Aminogruppe pro Molekül tragen. Ganz besonders eignen sich hierfür: Poly(ethylenimin), Poly(vinylamin).

Liegt eine Primer-behandelte Oberfläche vor, auf der freie Vinylsulfongruppen am Primer vorhanden sind, dann sind im Sinne einer Additionsreaktion besonders solche Makromoleküle kovalent anbindbar, die wenigstens eine Aminogruppe oder eine Hydroxylgruppe pro Molekül tragen. Ganz besonders geeignet sind: Poly(ethylen)imin, Poly(vinylamin), Poly(vinylalkohol), Poly(hydroxyalkyl(meth)acrylat), Kohlehydratpolymere, z. B. Stärke, Cellulose.

Liegt eine Primer-behandelte Oberfläche vor, auf der Vinylgruppen ($CH_2$=CH-) am Primer vorhanden sind, dann sind im Sinne einer 1,3-Cycloaddition solche Makromoleküle kovalent anbindbar, die 1,3-Diengruppe oder 1,3-dipolare Strukturen im Molekül tragen. Dies sind insbesondere: Poly(diacetylene), Poly(furan), Poly(thiophen-1,1-dioxid), Polymere, die 1,3-Butadieneinheiten in der Seitenkette enthalten; Polymere, die Furan in der Seitenkette enthalten; Polymere, die Thiophen-1,1-dioxid in der Seitenkette enthalten; Polymere, die Anthracen in der Seitenkette enthalten; Polymere, die 1,3-dipolare Strukturen (Diazoalkane, Azide, Nitril-Ylide, Nitrilimine, Nitriloxide, Azomethin-Ylide, Nitrone, Carbonyloxide) im Molekül enthalten.

Liegt eine Primer-behandelte Oberfläche vor, auf der Vinylgruppen ($CH_2$=CH-) am Primer vorhanden sind, dann sind im Sinne einer 2+2 Cycloaddition unter UV-Bestrahlung solche Makromoleküle kovalent anbindbar, die eine ungesättigte Gruppierung im Molekül tragen. Dies sind insbesondere Polymere, die C,C-Doppelbindungen enthalten, wie Homo- und Copolymere von Butadien; Polymere, die Aldehyd- oder Ketogruppen enthalten; Polymere, die Vinylether - Seitengruppen enthalten; Polymere, die Vinylgruppen in den Seitenketten enthalten.

Liegt eine Primer-behandelte Oberfläche vor, auf der Vinylgruppen ($CH_2$=CH-) am Primer vorhanden sind, dann sind im Sinne einer Hydrosilylierungsreaktion in Gegenwart eines Hydrosilylierungskatalysators solche Makromoleküle kovalent anbindbar, die eine Si-H Gruppierung im Molekül tragen. Dazu gehören: Homo- und Copolymere des Methyl-Siloxans (-($CH_3$)HSi-O-); Homo- und Copolymere des (2-Dimethylsilanylethyl)(meth)acrylats. Der Hydrosilylierungskatalysators ist entweder (i) zusammen mit dem Quat-Primer Polymeren oder (ii) zusammen mit dem aufzupfropfenden Polymeren zuzugeben.

Liegt eine Primer-behandelte Oberfläche vor, auf der freie Amino- oder Hydroxygruppen am Primer vorhanden sind, dann sind im Sinne einer Kondensationsreaktion besonders solche Makromoleküle kovalent anbindbar, die wenigstens eine der folgenden Gruppen pro Molekül tragen: Carbonsäure, Carbonsäurechlorid, Carbonsäureester; Sulfonsäure, Sulfonsäurechlorid, Sulfonsäureester; Phosphonsäure, Phosphonsäurechlorid, Phosphonsäureester Ganz besonders gut geeignet ist Poly(meth)acrylsäurechlorid.

Werden im Schritt b) des erfindungsgemäßen Verfahrens Monomere mitverwendet, die mehr als eine ethylenisch ungesättigte Gruppe aufweisen oder deren Funktionalität bezüglich der Polyaddition- bzw. -kondensationsreaktion größer ist als 2 ("Vernetzer"), so entstehen oberflächengebundene Polymernetzwerke. Die Netzwerkdichte ist durch das molare Verhältnis von Vernetzern zu den übrigen Monomeren einstellbar.

In einer weiteren Ausführungsform sind niedermolekularen Verbindungen, die reaktive funktionelle Gruppen enthalten, die mit den funktionellen Gruppen des Primers reagieren können, sind an die Primer-behandelte Oberfläche permanent anbindbar. Es ist ein besonderer Vorteil der Erfindung, dass insbesondere solche Substanzen an die Oberfläche gebunden werden können, die aufgrund ihrer hohen Übertragungskonstanten nicht durch Radikalreaktionen anbindbar sind. Dazu gehören: Thiolverbindungen, Phenolverbindungen, Halogenverbindungen, die lod und Brom enthalten, primäre Amine.

In der folgenden Tabelle sind geeignete Paare funktioneller Gruppen/niedermolekularer Verbindungen zusammengestellt.

| **funktionelle Gruppe am Primer** | **Verbindung** |
|---|---|
| Carbonat | Primäre und sekundäre Amine |
| Vinylsulfon | Primäre Amine,<br>primäre Alkohole,<br>primäre Thiole,<br>Silane |
| Amin | Isocyanate,<br>Carbonsäuren,<br>Sulfonsäuren,<br>Phosphonsäuren |
| Vinyl | Diene (über Diels-Alder-Reaktionen)<br>1,3-Dipole (über 1,3-Dipolare Cycloaddition), Alkene (über photochemische 2+2-Cycloadditionen),<br>Silane (über Hydrosilylierung) |

Die Erfindung wird durch das folgende Beispiel näher veranschaulicht.

I. Herstellungsbeispiele

Beispiel 1: Herstellung von Polyethylenimin-CarbonatQuat-Primern

Polyethylenimin ($M_w$ = 10000 g/mol, Aldrich) (15.2 mmol $NH_2$-Gruppen) und Trimethyl-[3-(2-oxo-[1,3]dioxolan-4-ylmethoxycarbonylamino)-propyl]-ammonium-methylsulfat (7,6 mmol) wurden in Methanol bei 70°C 8h gerührt. Das Produkt wurde durch Ausfällen in Toluol isoliert. Die NMR-spektroskopische Analyse zeigte die Anwesenheit aller Bausteine im Produkt.

Die nichtumgesetzten Aminogruppen können durch Umsetzung mit weiteren Derivatisierungsreagenzien in andere funktionelle Gruppen umgewandelt werden. Mit dem so erhaltenen Primer können verschiedene Oberflächen behandelt werden. Die behandelten Oberflächen können, in Abhängigkeit von der Beschaffenheit der funktionellen Gruppen, durch Behandlung mit ethylenisch ungesättigten Verbindungen oder Verbindungen mit komplementär reaktiven Gruppen modifiziert werden.

Beispiele 2 bis 8: Herstellung von Polyethylenimin-Allyl-CarbonatQuat Primern

Eingesetzte Derivatisierungsreagentien:

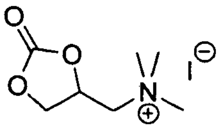

Q

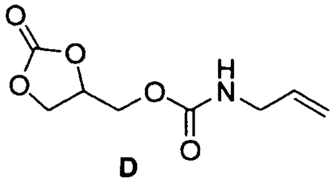

D

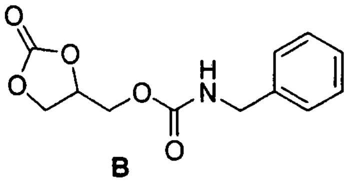

B

Erstes Derivatisierungsreagenz:

Cyclisches Carbonat (Q), hergestellt aus 3-Chlor-1,2-propandiol, wie beschrieben von N. Pasquier, H. Keul and M. Möller; Des. Monomers Polym. 8, 679-703 (2005).

N-Benzylurethan-Carbonat (B) wurden aus Glycerolcarbonat dargestellt, wie beschrieben von H. Keul, M. Möller, N. Pasquier and L. Ubaghs; EP 1541568 (2005).

Zweites Derivatisierungsreagenz:

N-Allylurethan-Carbonat (D) wurde aus Glycerolcarbonat hergestellt, wie beschrieben von H. Keul, M. Möller, N. Pasquier and L. Ubaghs; EP 1541568 (2005). Das Carbonat (D) wurde vor dem weiteren Einsatz nicht gereinigt und enthielt ein Äquivalent Phenol.

Allgemeine Herstellungsvorschrift

Zu einer Lösung von Polyethylenimin (PEI) ($M_w$ = 10000 g/mol, Aldrich) in einem inerten organischen Lösungsmittel, wie N-dialkylierte Carbonsäureamide, z. B. N,N-Dimethylformamid (DMF) oder N,N-Dimethylacetamid (DMAc), wurde bei einer Temperatur von 0 bis 100°C, vorzugsweise bei 60°C, eine Lösung (im gleichen oder anderen Lösungsmittel) eines oder mehrerer funktionalisierter cyclischer Carbonate gegeben. Die Lösung wurde 1 bis 48 h bei einer Temperatur von 0 bis 100°C gerührt. Nach Abkühlen auf Raumtemperatur wurde das Polymer ein- oder mehrmals in einem geeigneten Fällungsmittel gefällt (z.B. aliphatische Ether, wie Diethylether, Kohlenwasserstoffe wie Pentan oder deren Mischungen in verschiedenem Verhältnis). Nach Abdekantieren wurde das Polymer im Vakuum getrocknet.

Beispiel 2

Zu einer Lösung von 2,5 Teilen Polyethylenimin in 38 ml DMF wurde bei 60°C ein Gemisch aus cyclischem Carbonat Q (0,417 Teilen) und cyclischem Carbonat D (3,753 Teilen) gegeben. Die klare Lösung wurde 19 h bei 60°C gerührt. Nach Abkühlung auf Raumtemperatur wurde das Polymer in 100 ml Diethylether gefällt. Zur weiteren Reinigung wurde das Polymer in 50 ml Methanol gelöst und erneut in 250 ml Diethylether gefällt. Nach dem Trocknen im Ölpumpenvakuum wurde ein gelber Polymerschaum erhalten. Ausbeute: 4,87 Teile, 88%.

Beispiel 3

Zu einer Lösung von Polyethylenimin (2,500 Teile) in 38 ml DMF wurde bei 60°C ein Gemisch aus cyclischem Carbonat Q (0,833 Teile) und cyclischem Carbonat D (3,342 Teile) gegeben. Die klare Lösung wurde 19 h bei 60°C gerührt. Nach Abkühlung auf Raumtemperatur wurde das Polymer in 100 ml Diethylether gefällt. Zur weiteren Reinigung wurde das Polymer in 50 ml Methanol gelöst und erneut in 250 ml Diethylether gefällt. Nach dem Trocknen im Ölpumpenvakuum wurde ein gelber Polymerschaum erhalten. Ausbeute 5,183 Teile, 91%.

Beispiel 4

Zu einer Lösung von Polyethylenimin (2,500 Teile) in 38 ml DMF wurde bei 60°C ein Gemisch aus cyclischem Carbonat Q (0,001458 Teile) und cyclischem Carbonat D (2,710 Teile) gegeben. Die klare Lösung wurde 19 h bei 60°C gerührt. Nach Abkühlung auf Raumtemperatur wurde das Polymer in 100 ml Diethylether gefällt. Zur weiteren Reinigung wurde das Polymer in 50 ml Methanol gelöst und erneut in 250 ml Diethylether gefällt. Nach dem Trocknen im Ölpumpenvakuum wurde ein leicht oranger Polymerschaum erhalten. Ausbeute 5,488 Teile, 94%.

Beispiel 5

Zu einer Lösung von Polyethylenimin (5,000 Teile) in 75 ml DMF wurde bei 60°C ein Gemisch aus cyclischem Carbonat Q (4,166 Teilen) und cyclischem Carbonat D (4,185 Teilen) gegeben. Die klare Lösung wurde 18 h bei 60°C gerührt. Nach Abkühlung auf Raumtemperatur wurde das Polymer in Diethylether (150 ml) gefällt. Zur weiteren Reinigung wurde das Polymer in Methanol (100 ml) gelöst und in Diethylether (500 ml) gefällt. Nach dem Trocknen im Ölpumpenvakuum wurde ein leicht oranger Polymerschaum erhalten. Ausbeute 11,65 Teile, 96%..

Beispiel 6

Zu einer Lösung von Polyethylenimin (7,100 Teile) in 70 ml DMF wurde bei 60°C eine Lösung aus cyclischem Carbonat Q (2,958 Teile) und cyclischem Carbonat B (0,1035 Teile) in 30 ml DMF gegeben. Die klare Lösung wurde 19 h bei 60°C gerührt. Nach Abkühlung auf Raumtemperatur wurde das Polymer in Diethylether/Pentan (5:7, V:V, 600 ml) gefällt. Zur weiteren Reinigung wurde das Polymer in Methanol (30 ml) gelöst und in Diethylether/Pentan (3:7, V:V, 500 ml) gefällt. Nach dem Trocknen im Ölpumpenvakuum wurde ein gelbes hoch viskoses Öl erhalten. Ausbeute 9,157 Teile, 86%.

Beispiel 7

Zu einer Lösung von Polyethylenimin (2,500 Teile) in 20 ml DMF wurde bei 60°C eine Lösung aus cyclischem Carbonat Q (0,417 Teile), cyclischem Carbonat D (4,108 Teile) und cyclischem Carbonat B (0.0365 Teile) in DMF (15 ml) gegeben. Die klare Lösung wurde 19 h bei 60°C gerührt. Nach Abkühlung auf Raumtemperatur wurde das Polymer in Diethylether/Pentan (5:7, V:V, 300 ml) gefällt. Zur weiteren Reinigung wurde das Polymer in Methanol (10 ml) gelöst und in Diethylether/Pentan (3:7, V:V, 250 ml) gefällt. Diese zweite Fällung wurde wiederholt. Nach dem Trocknen im Ölpumpenvakuum wurde ein gelber Polymerschaum erhalten. Ausbeute 5,04 Teile, 90%.

Beispiel 8

Zu einer Lösung von Polyethylenimin (2,500 Teile) in 20 ml DMF wurde bei 60°C eine Lösung aus cyclischem Carbonat Q (2,083 Teile), cyclischem Carbonat D (2,262 Teile) und cyclischem Carbonat B (0,0365 Teile) in DMF (20 ml) zugegeben. Die klare Lösung wurde 19 h bei 60°C für gerührt. Nach Abkühlung auf Raumtemperatur wurde das Polymer in Diethylether/Pentan (1:1, V:V, 300 ml) gefällt. Zur weiteren Reinigung wurde das Polymer in Methanol (10 ml) gelöst und in Diethylether/Pentan (1:1, V:V, 250 ml) gefällt. Diese zweite Fällung wurde wiederholt. Nach Dekantieren wurde das Polymer in Methanol (10 ml) gelöst und in Diethylether (250 ml) ausgefällt. Nach dem Trocknen im Ölpumpenvakuum wurde ein gelber Polymerschaum erhalten. Ausbeute 4,94 Teile, 82%.

NMR Charakterisierung der Polymere

Zur Quantifizierung wurden geeignete Signale der $^1$H-NMR Spektren in DMSO-$d_6$ durch Integration miteinander verglichen. Die Ergebnisse sind in Tabelle 1 zusammengefasst.

Tabelle 1: Verhältnis der Carbonatbausteine im Ansatz und Zusammensetzung der Polyethylenimin-Allyl-CarbonatQuat Primer

| | Eduktmischung | | | Primerzusammensetzung | | | | |
|---|---|---|---|---|---|---|---|---|
| Beispiel | Carbonat Q[a] | Carbonat D[a] | Carbonat B[a] | Urethan Q[b] | Urethan D[b] | Urethan B[b] | Reinheit (%)[c] | Ausbeute (%) |
| 2 | 2,50 | 22,50 | - | 3,20 | 21,4 | - | - | 88 |
| 3 | 5,00 | 20,00 | - | 7,20 | 19,5 | - | - | 91 |
| 4 | 8,75 | 16,25 | - | 13,50 | 14,9 | - | - | 94 |
| 5 | 12,50 | 12,50 | - | 16,00 | 12,8 | - | - | 96 |
| 6 | 6,25 | - | 0,25 | 6,55 | - | 0,35 | >95 | 86 |
| 7 | 2,50 | 22,25 | 0,25 | 4,40 | 22,1 | 0,17 | >95 | 90 |

(fortgesetzt)

| Beispiel | Eduktmischung Carbonat Q[a] | Carbonat D[a] | Carbonat B[a] | Primerzusammensetzung Urethan Q[b] | Urethan D[b] | Urethan B[b] | Reinheit (%)[c] | Ausbeute (%) |
|---|---|---|---|---|---|---|---|---|
| 8 | 12,50 | 12,25 | 0,25 | 12,20 | 11,3 | 0,17 | > 97 | 82 |

[a] Verhältnis von eingewogenen Carbonaten zu 100 Ethylenimin Einheiten.
[b] Anteil an primären Amingruppen, die mit dem Koppler zur entsprechenden Urethangruppe umgesetzt wurden; mittels NMR bestimmt.
[c] mittels NMR bestimmt.

Beispiel 9: Herstellung von Polyethylenimin-Methacrylat-EpoxyQuat Primern

In eine Lösung aus 3,168 Teilen Polyethylenimin ($M_w$ = 10000 g/mol, Aldrich) in 30 Teilen Wasser wurde ein Gemisch aus 1,584 Teilen 2,3-Epoxypropyltrimethylammoniumchlorid und 1.584 Teilen Glycidylmethacrylat langsam getropft und unter kräftigem Rühren 12 Stunden unter Rückfluss zum Sieden erhitzt. Die Lösung wurde auf Raumtemperatur abgekühlt und mit 13,66 Teilen Wasser verdünnt. Man erhielt eine hochviskose Lösung von gelblicher Farbe, die für Beschichtungsversuche verwendet wurde.
$^1$H-NMR (300 MHz, DMSO-$d_6$):

> $\delta$ = 1,69 (s, 3H, H-5), 2,02-2,90 (breit, Polyethylenimin bulk-Signal; 2H, H-3; 2H, H-11), 3,04 (s, 9H, H-4), 3,18-3,38 (m, 2H, H-1; 1 H, H-9), 3,52-3,70 (br, 1 H, H-9), 4,00-4,18 (m, 1 H, H-2; 1 H, H-10), 5,14 (s, 1 H, H-6a), 5,51 (s, 1 H, H-6b) ppm.

$^{13}$C-NMR (75 MHz, DMSO-$d_6$):

> $\delta$ = 16,06 (C-5), 44,88-48,00 (br, Polyethylenimin bulk-signal; C-3; C-11), 49,64-53,14 (br, bulk-Signal; C-3; C-11), 54,15 (C-4), 63,58 (C-1), 64,03 (C-2;C-10), 64,55 (C-9), 68,79-70,07 (br, C-2; C-10), 120,28 (C-6), 142,91 (C-7) ppm.

II. Anwendungsbeispiele

II.1 Applikation der Primer

Untersuchung der Öl- und Wasser / Alkoholabweisung

Die Ölabweisung der behandelten Gewebeproben wurde mit der AATCC Testmethode 118-1978 untersucht, die zur Bestimmung der Güte von Perfluoracrylat-Finishings eingeführt ist:

> Ein Tropfen von je 50 $\mu$l der Testflüssigkeit, beginnend mit der Testflüssigkeit Nr. 1 der Tabelle 2 wurde auf das Gewebe aufgesetzt. Falls der Tropfen nicht innerhalb von 30 Sekunden in das Gewebe eindrang oder es benetzte, wurde ein Tropfen der nächsten Testflüssigkeit aufgesetzt. Die Testnote bezieht sich auf die Nummer der letzten Testflüssigkeit, welche nicht in das Gewebe eindringt oder es benetzt.

Die Fähigkeit zur Abweisung von Wasser und Alkohol wurde in Anlehnung an den oben genannten Test mit Testgemischen aus Wasser und Isopropanol untersucht. Es wurden die folgenden Testflüssigkeiten verwendet:

Tabelle 2: Testflüssigkeiten zur Bewertung der Ölabweisung und der Wasser- / Alko-holabweisung von Gewebeproben

| Note | Testflüssigkeiten zur Bewertung der Ölabweisung | Wasser / Alkohol - Abweisung |
|---|---|---|
| 0 | Nujol-Öl | Wasser |
| 1 | Nujol-Öl : n-Hexadecan 65:35 | Wasser:Isopropanol 9:1 |
| 2 | n-Hexadecan | Wasser:Isopropanol 8:2 |
| 3 | n-Tetradecan | Wasser:Isopropanol 7:3 |
| 4 | n-Dodecan | Wasser:Isopropanol 6:4 |
| 5 | n-Decan | Wasser:Isopropanoi 5:5 |

(fortgesetzt)

| Note | Testflüssigkeiten zur Bewertung der Ölabweisung | Wasser / Alkohol - Abweisung |
|---|---|---|
| 6 | n-Octan | Wasser:Isopropanol 4:6 |
| 7 | n-Heptan | Wasser:Isopropanol 3:7 |
| 8 | --- | Wasser:Isopropanol 2:8 |
| 9 | --- | Wasser:Isopropanol. 1:9 |
| 10 | --- | Isopropanol |
| (Die Zusammensetzung der Mischungen ist stets in Volumenteilen angegeben) | | |

Untersuchung der Elementarzusammensetzung der Oberflächen

Die Elementarzusammensetzung der obersten, ca. 10 nm dicken Oberflächenschicht wurde mit einem AXIS His 165 Ultra Photoelektronenspektrometer der Firma Kratos Analytical durchgeführt. Die Photoanregung erfolgte mit monoenergetischer Al-$K_{1,2}$ Strahlung der Energie 1486,6 eV und einer Leistung von 150 W auf einer Fläche von 600 x x 800 $\mu m^2$.

Zur Auswertung wurde die effektive Filmdicke gemäß der folgenden Formel berechnet:

$$f = \frac{d_{film}}{d_e} = \frac{E_P - E_S}{E_F - E_S}$$

(f = effektive Filmdicke, $d_{film}$ = Dicke der analysierten Oberflächenschicht, $d_e$ = Informationstiefe = 10 nm, $E_P$ = Elementargehalt der Probenoberfläche, $E_S$ = Elementargehalt des Substrats, $E_F$ = Elementargehalt des Beschichtungsmaterials).

II.1.1 Applikation von Polyethylenimin-Allyl-CarbonatQuat Primern auf Baumwolle

Für die Beispiele wurde das M0400 Standard-Baumwollgewebe der Firma Testex Prüftextilien verwendet.

Aufzugsverfahren

0,5 Teile $PEI_{10k}[Allyl_x:CarbonatQuat_y]$ wurden in 99,5 Teilen Wasser bei Raumtemperatur aufgelöst. In diese Lösung wurde ein quadratisches Stück Baumwollgewebe (2,86 Teile, Flottenverhältnis 1 : 35) aus M0400 Testex 60 Sekunden eingetaucht. Die Lösung wurde durch Abquetschen aus dem Gewebe entfernt, anschließend wurde einmal in 20 ml destilliertem Wasser gewaschen. Das Gewebe wurde bei Raumtemperatur an der Luft getrocknet.

Vergleichsproben wurden wie oben beschrieben behandelt, jedoch wurde nach Abquetschen der Primer-Lösung nicht mit Wasser nachgespült.

Die Wirksamkeit der Behandlung wurde durch XPS-Analysen nachgewiesen, die zeigen, dass auf den Proben eine ca. 1 - 1.5 nm dünne Schicht der Primermoleküle anwesend ist. Die Ergebnisse sind in Tabelle 3 zusammengefasst

Tabelle 3: XPS Analyse von Polyethylenimin-Allyl-CarbonatQuat behandelten Baumwollproben.

| Primer | Allyl : Quat | Nachspülen | Gew.-%N | Gew.-%O | $d_{film}/d_e$ |
|---|---|---|---|---|---|
| Ohne | --- | --- | 0 | 41.4 ± 2 | 0 |
| Beispiel 2 | 87 : 13 | --- | 4,5 ± 1,5 | 33,6 ± 2 | 0,17 |
| Beispiel 2 | 87 : 13 | ja | 2,9 ± 1,0 | 37,7 ± 2 | 0,11 |
| Beispiel 3 | 73 : 27 | --- | 3,8 ± 1,3 | 34,7 ± 2 | 0,14 |
| Beispiel 3 | 73 : 27 | ja | 3,3 ± 1,1 | 36,0 ± 2 | 0,12 |
| Beispiel 5 | 45 : 55 | --- | 2,9 ± 1,1 | 36,9 ± 2 | 0,11 |
| Beispiel 5 | 45 : 55 | ja | 3,6 ± 1,3 | 35,3 ± 2 | 0,13 |

Photoinitiierte Polymerisation von Perfluoroctylethylmethacrylat auf geprimerter Baumwolle
5 - 20 Teile Perfluorooctylethylmethacrylat ($CH_2=C(CH_3)-COO-(CH_2)_2-C_8F_{17}$, FOA) und

2 Teile Benzoinmonomethylether wurden in 93 - 78 Teilen Freon-113 bei Raumtemperatur aufgelöst. In diese Lösung wurde ein quadratisches Stück Baumwollgewebe (2,86 Teile, Flottenverhältnis 1 : 35) aus geprimertem M0400 Testex 60 Sekunden eingetaucht. Die Lösung wurde durch Abquetschen aus dem Gewebe entfernt, anschließend wurde das Gewebe in einer Stickstoff-Atmosphäre 12 Stunden mit UV-Licht (366 nm, 8W, Abstand zur Lichtquelle: 10 cm) bestrahlt.

Die Wirksamkeit der Behandlung wurde durch XPS-Analysen nachgewiesen, die zeigen, dass auf den Proben eine ca. 1 - 6 nm dicke Schicht aus Poly(perfluoroctylmethacrylat) anwesend ist. die Ergebnisse sind in Tabelle 4 zusammengefasst.

Tabelle 4: XPS Analyse von Polyethylenimin-Allyl-CarbonatQuat behandelten Baumwoll-Proben, auf die FOA aufpolymerisiert wurde.

| Probe | Primer | Teile FOA | Gew.-% N | Gew.-% F | $d_{film} / d_e$ |
|---|---|---|---|---|---|
| BW01.4 | Beispiel 2 | 5 | 3,49 | 6,41 | 0,10 |
| BW03.4 | Beispiel 3 | 5 | 2,83 | 3,44 | 0,06 |
| BW05.4 | Beispiel 5 | 5 | 2,80 | 7,05 | 0,11 |
| BW07.4 | Beispiel 4 | 5 | 2,42 | 6,77 | 0,11 |
| BW09.4 | Beispiel 6 | 5 | 1,99 | 2,80 | 0,04 |
| BW11.4 | Beispiel 7 | 5 | 3,50 | 2,99 | 0,05 |
| BW13.4 | Beispiel 8 | 5 | 2,52 | 3,84 | 0,06 |
| BW01.7 | Beispiel 2 | 20 | 2,12 | 34,80 | 0,56 |
| BW03.7 | Beispiel 3 | 20 | 2,07 | 38,77 | 0,62 |
| BW05.7 | Beispiel 5 | 20 | --- | 49,91 | 0,80 |
| BW07.7 | Beispiel 4 | 20 | 1,42 | 32,29 | 0,52 |
| BW09.7 | Beispiel 6 | 20 | 1,32 | 33,09 | 0,53 |
| BW11.7 | Beispiel 7 | 20 | 1,86 | 39,97 | 0,64 |
| BW13.7 | Beispiel 8 | 20 | 1,13 | 44,21 | 0,71 |

Die behandelten Baumwoll - Proben erzielten die in Tabelle 5 zusammengefassten Abweisungsnoten, welche den besonderen Erfolg der Behandlung belegen.:

Tabelle 5: Abweisungsnoten für Öl und Wasser / Isopropanolgemischen von Polyethylenimin-Allyl-CarbonatQuat behandelten Baumwollproben, auf die FOA aufpolymerisiert wurde.

| Probe | Primer | Teile FOA | Note Alkohol | Note Öl |
|---|---|---|---|---|
| BW01.7 | Beispiel 2 | 20 | 2 | 6 |
| BW03.7 | Beispiel 3 | 20 | 4 | 7 |
| BW05.7 | Beispiel 5 | 20 | 3 | 7 |
| BW07.7 | Beispiel 4 | 20 | 2 | 6 |
| BW09.7 | Beispiel 6 | 20 | 2 | 5 |
| BW11.7 | Beispiel 7 | 20 | 4 | 7 |
| BW13.7 | Beispiel 8 | 20 | 3 | 7 |

Aufpolymerisieren von Kalium 3-acryloylpropylsulfonat

5 Teile Kalium 3-acryloylpropylsulfonat ($KO_3S-(CH_2)_3-OOC-CH=CH_2$) und 0,043 Teile Benzoinmonomethylether wurden in 24.3 Teilen Wasser bei Raumtemperatur aufgelöst. In diese Lösung wurde ein quadratisches Stück Baumwollgewebe (2,86 Teile, Flottenverhältnis 1 : 35) aus geprimertem M0400 Testex 60 Sekunden eingetaucht. Die Lösung wurde durch Abquetschen aus dem Gewebe entfernt, anschließend wurde das Gewebe in einer Stickstoff-Atmosphäre 4 oder 20 Stunden lang mit UV-Licht (366 nm, 8W, Abstand zur Lichtquelle: 10 cm) bestrahlt.

Die Wirksamkeit der Behandlung wurde durch XPS-Analysen nachgewiesen, die zeigen, dass auf den Proben eine ca. 1 nm dicke Schicht aus Poly(Kalium 3-acryloylpropylsulfonat) anwesend ist. Die Ergebnisse sind in Tabelle 6 zusammengefasst.

Tabelle 6: XPS Analyse von Polyethylenimin-Allyl-CarbonatQuat behandelten Baumwollproben, auf die Kalium 3-acryloylpropylsulfonat aufpolymerisiert wurde

| Probe | Primer | Bestrahlungszeit / h | Nachspülen | Gew.-% N | Gew.-%S | d /$d_e$ |
|---|---|---|---|---|---|---|
| BW | --- | --- | --- | 0 | 0 | 0 |
| BW-S1 | Beispiel 2 | 4 | Nein | 2,9 ± 1,0 | 1,3 ± 0,5 | 0,09 |
| BW-S2 | Beispiel 2 | 4 | Ja | 2,8 ± 1,0 | 1,5 ± 0,5 | 0,11 |
| BW-S3 | Beispiel 2 | 20 | Nein | 2,5 ± 0,8 | 1,3 ± 0,5 | 0,09 |
| BW-S4 | Beispiel 2 | 20 | Ja | 2,6 ± 0,9 | 1,3 ± 0,5 | 0,09 |

Diese aufpolymerisierte Schicht aus Poly(Kalium 3-acryloylpropylsulfonat) erhöht z.B. die Anfärbbarkeit der Baumwolle mit basischen Farbstoffen signifikant. Als Beispiel wird die Anfärbung mit Astrazonblau 3RL beschrieben:

Anfärbetest mit Astrazonblau 3RL

1 Teile Astrazonblau 3RL und 1 Teil Uniperol wurden in 998 Teilen Wasser bei Raumtemperatur aufgelöst. In diese Lösung wurde ein quadratisches Stück Baumwollgewebe (10 Teile, Flottenverhältnis 1 : 100) aus M0400 Testex, das nacheinander mit Polyethylenimin-Allyl-CarbonatQuat und mit Kalium 3-acryloylpropylsulfonat behandelt wurde (Proben BW-S1 - BW-S4, Tabelle 7), 5 Minuten lang eingetaucht. Die Lösung wurde durch Abquetschen aus dem Gewebe entfernt, anschließend wurde das Gewebe mit kaltem Wasser gewaschen, bis kein Farbstoff mehr im Waschwasser sichtbar ist. Die Probe wurde an der Luft getrocknet.

Tabelle 7: Farbdifferenz (CIE L*a*b) der modifizierten Baumwollproben zu unbehandelter Baumwolle nach Anfärben mit Astrazonblau 3RL (Farbkoordinate einer unbehandelten, gefärbten Baumwollprobe: L* = 65, a*= -2.2, b*= 19.6, C*= 19.8, H* = 263,5)

| Probe | ΔL* | Δa* | Δb* | ΔC* | ΔH* | ΔE* |
|---|---|---|---|---|---|---|
| BW-S1 | -5,92 | 0,53 | -4,45 | 4,38 | 0,93 | 7,4 |
| BW-S2 | -6,24 | 0,76 | -5,32 | 5,24 | 1,21 | 8,2 |
| BW-S3 | -5,18 | 0,66 | -4,67 | 4,59 | 1,07 | 7,0 |
| BW-S4 | -5,50 | 0,58 | -4,24 | 4,17 | 0,96 | 7,0 |

Das Ergebnis des Anfärbetests zeigt, dass eine deutlich stärkere Anfärbung der Baumwolle mit Astrazonblau 3RL erreicht werden konnten (ΔE* = 7 - 8).

II.2 Applikation von Polyethylenimin-Methacrylat-EpoxyQuat Primern auf Polyester

Für die Beispiele wurde das M0777 Dacron 57 Polyester-Standardgewebe (Flächengewicht: 126 g/$m^2$) der Firma Testex Prüftextilien verwendet.

Plasmabehandlung von PET-Fasern

Die Plasmabehandlung des PET-Gewebes mit einem Sauerstoff - Plasma fand in einem Niederdruck - Plasmareaktor statt, wie er in M. Käsemann, Dissertation, RWTH-Aachen 1999, beschrieben ist. Die Betriebsparameter sind in Tabelle 8 zusammengestellt. Das Plasma-modifizierte PET Gewebe wird im Folgenden als "ox-PET" bezeichnet.

Tabelle 8: Betriebsparameter des Niederdruck - Plasmagenerators zur $O_2$-Plasmabehandlung von PET - Gewebeproben

| Induzierte Leistung / W | $O_2$- Druck / Pa | Gasfluss / $cm^3$/s | Behandlungszeit / s | Abstand: Probe - Quarzfenster / cm |
|---|---|---|---|---|
| 300 | 25 | 50 | 60 | 9 |

Ausrüstung der PET-Gewebe mit dem Primer:

In eine Mischung aus 7,9 Teilen Polyethylenimin-Primer Lösung aus Beispiel 9 und 92,1 Teilen Wasser wurden 4.0 Teile PET- oder ox-PET - Gewebe (Flottenverhältnis: 1 : 25) 60 Sekunden lang eingetaucht. Das Gewebestück wurde kurz mit Wasser abgespült und danach zwischen zwei Blättern aus saugfähigem Papier mit einem 5 kg schweren Gewicht abgepresst und an der Luft getrocknet.

Der makromolekulare Primer konnte durch 90-minütiges Waschen mit einer Lösung aus 10 Teilen Natriumdodecylsulfat auf 1000 Teilen Wasser bei 30 °C nicht entfernt werden.

Photoinitüerte Polymerisation von Perfluoroctylethylmethacrylat auf geprimertem PET-Gewebe

6,0 Teile Perfluoroctylethylmethacrylat ($CH_2=C(CH_3)-COO-(CH_2)_2-C_8F_{17}$, FOA) und 0,06 Teile Benzoinmonomethylether wurden in 25 Teilen Freon-113 gelöst. Die Lösung wurde durch drei Einfrier-Vakuum-Auftau-Zyklen entgast, mit Stickstoff begast und im Dunkeln gelagert.

4 Teile PET- oder ox-PET Gewebe wurden 60 Sekunden lang unter Stickstoff-Atmosphäre in die Lösung eingetaucht und nach Verdunsten des Lösungsmittels bei Raumtemperatur Gewebe in einer Stickstoff-Atmosphäre 14 Stunden lang mit UV-Licht (366 nm, 8W, Abstand zur Lichtquelle: 10 cm) bestrahlt.

Die Wirksamkeit der Behandlung wurde durch XPS-Analysen nachgewiesen, die zeigen, dass auf den Proben eine ca. 4 nm dicke Schicht aus Poly(perfluorooctylethylmethacrylat) anwesend ist. Die Ergebnisse sind in Tabelle 9 zusammengefasst.

Tabelle 9: XPS Analyse von Polyethylenimin-Methacrylat-EpoxydQuat behandelten PET-Geweben, auf die FOA aufpolymerisiert wurde

| Probe | Behandlung | Elementanteile (Atom-%) | | | |
|---|---|---|---|---|---|
| | | C | O | N | F |
| PET01 | PET + Primer aus Beispiel 9 + FOA | 63,73 | 9,22 | 1,83 | 25,22 |
| PET02 | ox-PET + Primer aus Beispiel 9 + FOA | 61,65 | 11,51 | 2,19 | 24,65 |

Die Proben erreichten im Öl- und im Wasser / Alkoholabweisungstest die in Tabelle 10 zusammengestellten Abweisungsnoten. Die hohen Ölabweisungsnoten belegen die Anwesenheit einer perfluorierten Polymerschicht.

Tabelle 10: Abweisungsnoten für Öl und Wasser / Isopropanolgemischen von Polyethylenimin-Allyl-EpoxyQuat behandelten PET Proben, auf die FOA aufpolymerisiert wurde.

| Probe | Primer | Teile FOA | Note Alkohol | Note Öl |
|---|---|---|---|---|
| PET01 | Beispiel 9 | 24 | 2 | 4 |
| PET02 | Beispiel 9 | 24 | 0 | 5 |

**Patentansprüche**

1. Verfahren zur Erzeugung von Beschichtungen auf Oberflächen, bei dem man

   a) eine Oberfläche mit einem polymeren Primer behandelt, wobei der Primer im Molekül mehrere quaternäre Ammoniumgruppen und gleichzeitig mehrere funktionelle Gruppen X enthält, die ausgewählt sind unter (i) ethylenisch ungesättigten Gruppen, und (ii) funktionellen Gruppen, die zur Reaktion mit Verbindungen mit komplementär reaktiven Gruppen befähigt sind; und
   b) die behandelte Oberfläche unter Bedingungen einer Polymerisations- und/oder Kupplungsreaktion mit ethylenisch ungesättigten Verbindungen und/oder Verbindungen mit gegenüber den funktionellen Gruppen kömplementär reaktiven Gruppen behandelt.

2. Verfahren nach Anspruch 1, wobei die funktionellen Gruppen, die zur Reaktion mit Verbindungen mit komplementär reaktiven Gruppen befähigt sind, unter Carboxyl-, Epoxy-, Isocyanat- und Carbonatgruppen ausgewählt sind.

3. Verfahren nach Anspruch 1 oder 2, wobei der Primer durchschnittlich wenigstens 5 quaternäre Ammoniumgruppen im Molekül enthält.

4. Verfahren nach Anspruch 1, 2 oder 3, wobei der Primer erhalten ist durch Umsetzung eines Primerbasispolymers, das über primäre und/oder sekundäre Aminogruppen, Carboxylgruppen und/oder Hydroxylgruppen verfügt, mit einem ersten Derivatisierungsreagenz zur Einführung quaternärer Ammoniumgruppen und gegebenenfalls einem zweiten Derivatisierungsreagenz zur Einführung der Gruppen X.

5. Verfahren nach Anspruch 4, wobei das erste Derivatisierungsreagenz die Formel I aufweist

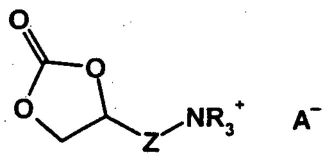

I

worin Z für $C_1$-$C_{12}$-Alkylen oder $C_1$-$C_{12}$-Alkylen-O-CO-NH-$C_2$-$C_{12}$-Alkylen steht, R unabhängig voneinander für eine $C_1$-$C_6$-Alkyl- oder eine Benzylgruppe steht und $A^-$ für ein Anion steht.

6. Verfahren nach Anspruch 4, wobei das erste Derivatisierungsreagenz die Formel II oder III aufweist

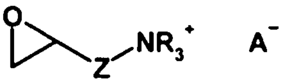

II

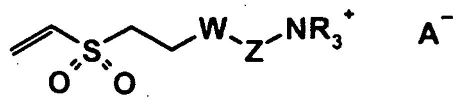

III

worin Z für $C_1$-$C_{12}$-Alkylen, W für O oder NH steht, R für eine $C_1$-$C_6$-Alkyl- oder eine Benzylgruppe steht und $A^-$ für ein Anion steht.

7. Verfahren nach einem der Ansprüche 4 bis 6, wobei das zweite Derivatisierungsreagenz ausgewählt ist unter

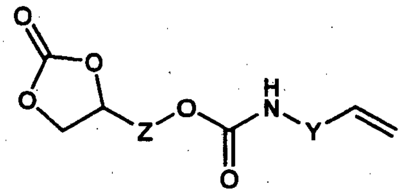
,
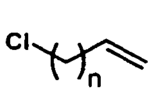
,
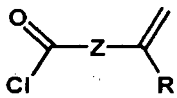

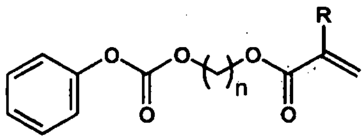
,
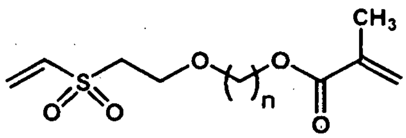

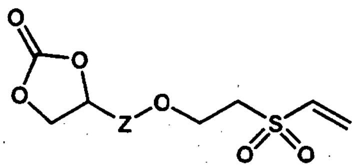

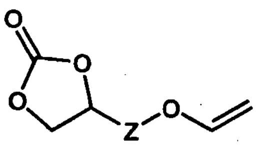

worin Y und Z unabhängig voneinander für $C_1$-$C_{12}$-Alkylen stehen, R für Wasserstoff oder Methyl steht und n für eine ganze Zahl von 1 bis 12 steht.

**8.** Verfahren nach einem der Ansprüche 4 bis 6, wobei das zweite Derivatisierungsreagenz ausgewählt ist unter

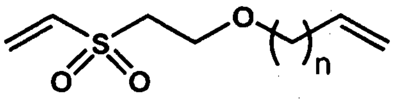 , 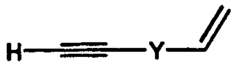

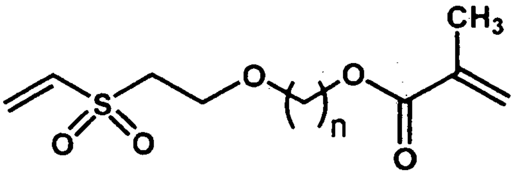 ,

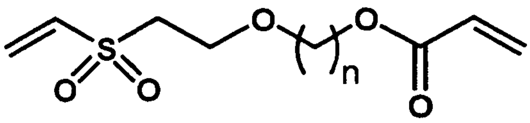

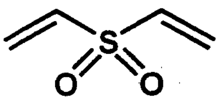

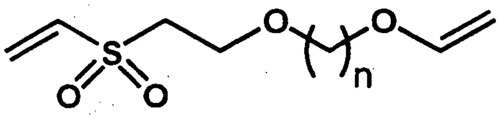 , 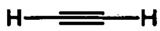

worin Y für $C_1$-$C_{12}$-Alkylen steht und n für eine ganze Zahl von 1 bis 12 steht.

**9.** Verfahren nach einem der Ansprüche 4 bis 8, wobei der Primer erhalten ist, indem man das Primerbasispolymer außerdem mit einem dritten Derivatisierungsreagenz zur Einführung von Initiatorgruppen umsetzt.

**10.** Verfahren nach einem der Ansprüche 4 bis 6, wobei das zweite Derivatisierungsreagenz die Formel IV aufweist

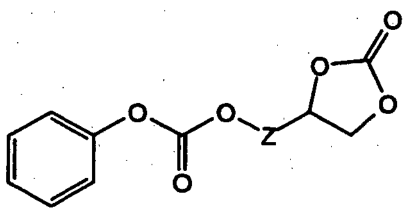

**IV**

worin Z für $C_1$-$C_{12}$-Alkylen steht.

11. Verfahren nach einem der Ansprüche 4 bis 6, wobei das zweite Derivatisierungsreagenz die Formel V aufweist

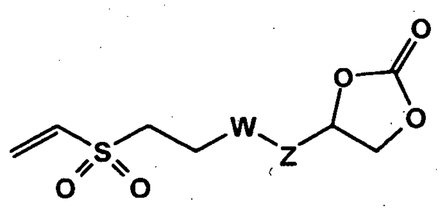

V

worin W für O oder NH steht und Z für $C_1$-$C_{12}$-Alkylen steht.

12. Verfahren nach einem der Ansprüche 4 bis 6, wobei das zweite Derivatisierungsreagenz ausgewählt ist unter Bisepoxyden, Carbonsäureanhydriden, Dicarbonsäuren, Diisocyanaten und Diphenylcarbonat.

13. Verfahren nach einem der vorhergehenden Ansprüche, wobei man im Schritt b) die Oberfläche unter den Bedingungen einer radikalischen oder kationischen Polymerisation mit ethylenisch ungesättigten Monomeren behandelt, wobei man an der Oberfläche fixierte Polymere erhält.

14. Verfahren nach einem der vorhergehenden Ansprüche, wobei man im Schritt b) die Oberfläche unter den Bedingungen einer Polyadditions- oder -kondensationsreaktion mit Monomeren, die über gegenüber den funktionellen Gruppen komplementär reaktive Gruppen verfügen, wobei man an der Oberfläche fixierte Polymere erhält.

15. Verfahren nach einem der vorhergehenden Ansprüche, wobei man im Schritt b) Oligomere oder Polymere an die behandelte Oberfläche kuppelt, die gegenüber den funktionellen Gruppen komplementär reaktive Gruppen aufweisen.

16. Verfahren nach Anspruch 15, wobei die Oligomere oder Polymere unter Polyalkylenoxiden und Polysiloxanen ausgewählt sind.

**Claims**

1. Method for producing coatings on surfaces, wherein

   a) a surface is treated with a polymeric primer, the primer molecule comprising a plurality of quaternary ammonium groups and at the same time a plurality of functional groups X which are selected from (i) ethylenically unsaturated groups and (ii) functional groups which are capable of reaction with compounds having complementarily reactive groups; and
   b) the treated surface is treated under conditions of a polymerization reaction and/or coupling reaction with ethylenically unsaturated compounds and/or compounds having groups which are reactive complementarily relative to the functional groups.

2. Method according to Claim 1, the functional groups capable of reaction with compounds having complementarily reactive groups being selected from carboxyl, epoxy, isocyanate and carbonate groups.

3. Method according to Claim 1 or 2, the primer molecule comprising on average at least 5 quaternary ammonium groups.

4. Method according to Claim 1, 2 or 3, the primer being obtained by reaction of a primer base polymer which possesses primary and/or secondary amino groups, carboxyl groups and/or hydroxyl groups with a first derivatization reagent for the introduction of quaternary ammonium groups and optionally with a second derivatization reagent for the introduction of the groups X.

**5.** Method according to Claim 4, the first derivatization reagent having the formula 1

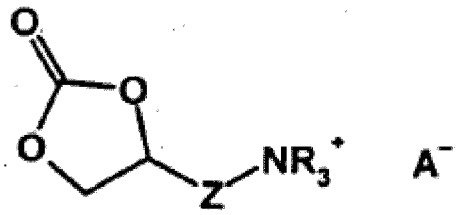

I

in which Z is $C_1$-$C_{12}$ alkylene or $C_1$-$C_{12}$ alkylene-O-CO-NH-$C_2$-$C_{12}$ alkylene, R independently at each occurrence is a $C_1$-$C_6$ alkyl group or a benzyl group, and $A^-$ is an anion.

**6.** Method according to Claim 4, the first derivatization reagent having the formula II or III

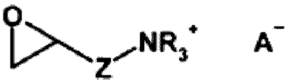

II

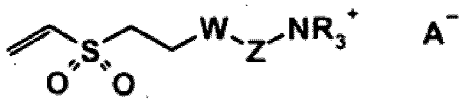

III

in which Z is $C_1$-$C_{12}$ alkylene, W is 0 or NH, R is a $C_1$-$C_6$ alkyl group or a benzyl group, and $A^-$ is an anion.

**7.** Method according to any of Claims 4 to 6, the second derivatization reagent being selected from

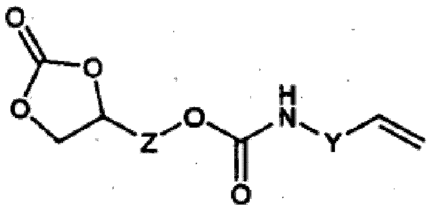
,
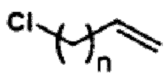
,
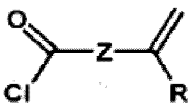

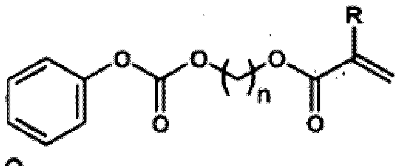
,
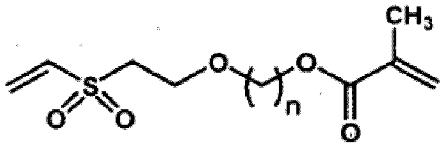

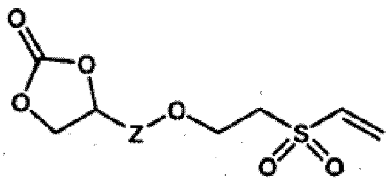

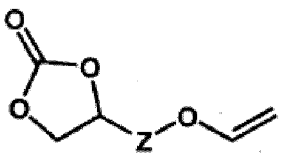

in which Y and Z independently of one another are $C_1$-$C_{12}$ alkylene, R is hydrogen or methyl and n is an integer from 1 to 12.

**8.** Method according to any of Claims 4 to 6, the second derivatization reagent being selected from

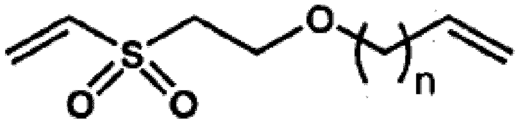 , 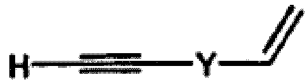

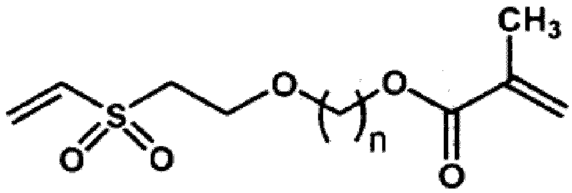 ,

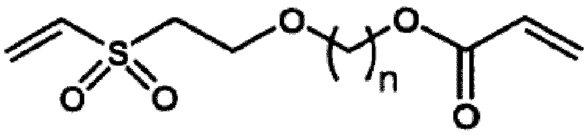

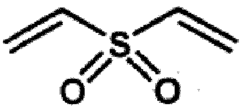

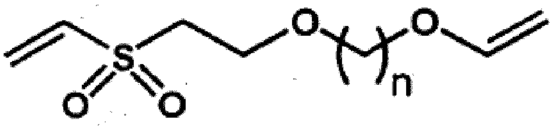 , 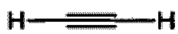

in which Y is $C_1$-$C_{12}$ alkylene and n is an integer from 1 to 12.

**9.** Method according to any of Claims 4 to 8, the primer being obtained by reacting the primer base polymer additionally with a third derivatization reagent for the introduction of initiator groups.

**10.** Method according to any of Claims 4 to 6, the second derivatization reagent having the formula IV

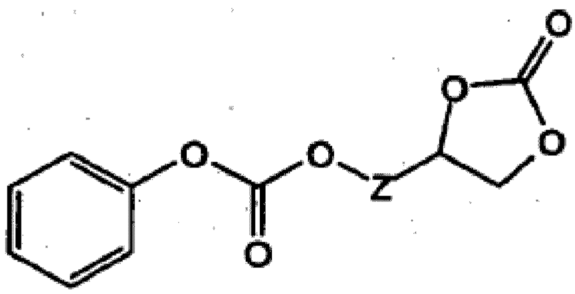

IV

in which Z is $C_1$-$C_{12}$ alkylene.

**11.** Method according to any of Claims 4 to 6, the second derivatization reagent having the formula V

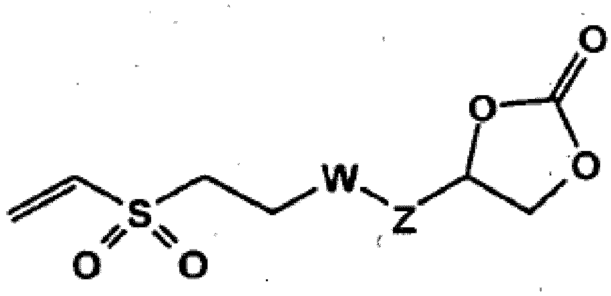

V

in which W is 0 or NH and Z is $C_1$-$C_{12}$ alkylene.

**12.** Method according to any of Claims 4 to 6, the second derivatization reagent being selected from bisepoxides, carboxylic anhydrides, dicarboxylic acids, diisocyanates and diphenyl carbonate.

**13.** Method according to any of the preceding claims, the surface in step b) being treated under the conditions of a radical or cationic polymerization with ethylenically unsaturated monomers, producing polymers fixed on the surface.

**14.** Method according to any of the preceding claims, the surface in step b) being treated under the conditions of a polyaddition or polycondensation reaction with monomers which possess groups which are reactive complementarily relative to the functional groups, producing polymers fixed on the surface.

**15.** Method according to any of the preceding claims, the treated surface being coupled in step b) with oligomers or polymers which have groups reactive complementarily relative to the functional groups.

**16.** Method according to Claim 15, the oligomers or polymers being selected from polyalkylene oxides and polysiloxanes.

**Revendications**

**1.** Procédé pour la production de revêtements sur des surfaces, dans lequel on

a) traite une surface par un primaire polymère, le primaire contenant dans la molécule plusieurs groupes ammonium quaternaire et en même temps plusieurs groupes fonctionnels X qui sont choisis parmi (i) des groupes à insaturation éthylénique, et (ii) des groupes fonctionnels qui sont aptes à la réaction avec des composés comportant des groupes réactifs de façon complémentaire ; et
b) traite la surface traitée, dans les conditions d'une réaction de polymérisation et/ou de couplage, avec des composé à insaturation éthylénique et/ou des composés comportant des groupes réactifs de façon complémentaire vis-à-vis des groupes fonctionnels.

**2.** Procédé selon la revendication 1, dans lequel les groupes fonctionnels qui sont aptes à la réaction avec des composés comportant des groupes réactifs de façon complémentaire sont choisis parmi des groupes carboxy, époxy, isocyanate et carbonate.

**3.** Procédé selon la revendication 1 ou 2, dans lequel le primaire contient en moyenne au moins 5 groupes ammonium quaternaire dans la molécule.

**4.** Procédé selon la revendication 1, 2 ou 3, dans lequel le primaire est obtenu par mise en réaction d'un polymère de base du primaire, qui est doté de groupes amino primaires et/ou secondaires, de groupes carboxy et/ou de groupes hydroxy, avec un premier réactif de fonctionnalisation pour l'introduction de groupes ammonium quaternaire et éventuellement un deuxième réactif de fonctionnalisation pour 1"introduction des groupes X.

5. Procédé selon la revendication 4, dans lequel le premier réactif de fonctionnalisation présente la formule I

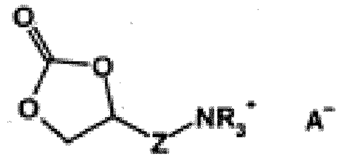

I

dans laquelle Z représente un groupe alkylène en $C_1$-$C_{12}$ ou alkylène ($C_1$-$C_{12}$) -O-CO-NH-alkylène ($C_2$-$C_{12}$), R représente chaque fois indépendamment un groupe alkyle en $C_1$-$C_6$ ou un groupe benzyle et $A^-$ représente un anion.

6. Procédé selon la revendication 4, dans lequel le premier réactif de fonctionnalisation présente la formule II ou III

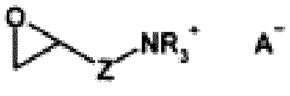

II

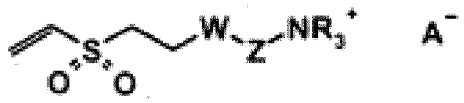

III

formules dans lesquelles Z représente un groupe alkylène en $C_1$-$C_{12}$, W représente 0 ou NH, R représente un groupe alkyle en $C_1$-$C_6$ ou un groupe benzyle et $A^-$ représente un anion.

7. Procédé selon l'une quelconque des revendications 4 à 6, dans lequel le deuxième réactif de fonctionnalisation est choisi parmi

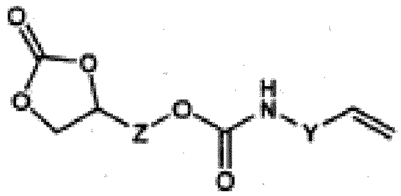
,
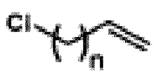
,
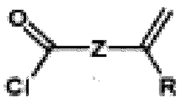

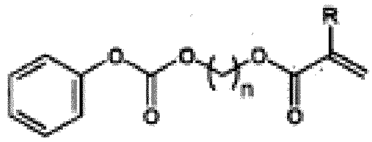
,
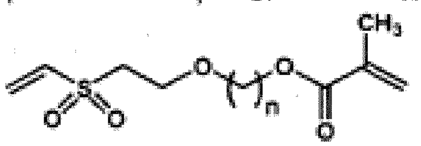

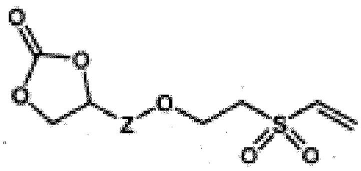

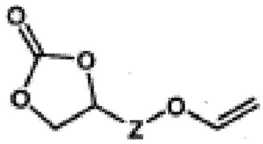

formules dans lesquelles Y et Z représentent indépendamment l'un de l'autre un groupe alkylène en $C_1$-$C_{12}$, R représente un atome d'hydrogène ou le groupe méthyle et n représente un nombre entier valant de 1 à 12.

8. Procédé selon l'une quelconque des revendications 4 à 6, dans lequel le deuxième réactif de fonctionnalisation est choisi parmi

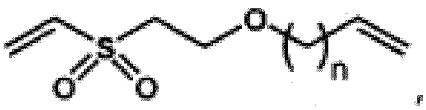

,

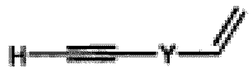

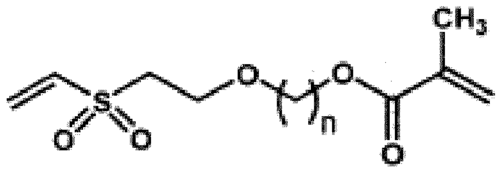

,

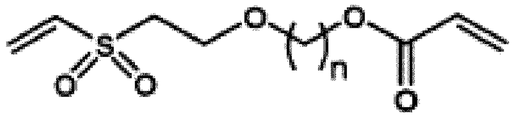

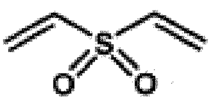

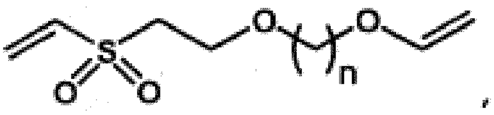

,

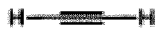

formules dans lesquelles Y représente un groupe alkylène en $C_1$-$C_{12}$ et n représente un nombre entier valant de 1 à 12.

9. Procédé selon l'une quelconque des revendications 4 à 8, dans lequel on obtient le primaire en faisant réagir le polymère de base du primaire en outre avec un troisième réactif de fonctionnalisation pour l'introduction de groupes amorceurs.

10. Procédé selon l'une quelconque des revendications 4 à 6, dans lequel le deuxième réactif de fonctionnalisation présente la formule IV

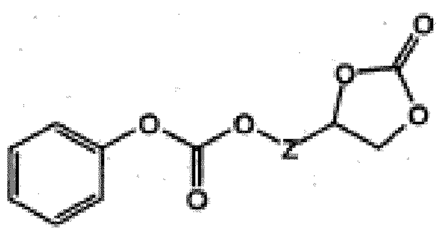

IV

dans laquelle Z représente un groupe alkylène en $C_1$-$C_{12}$.

11. Procédé selon l'une quelconque des revendications 4 à 6, dans lequel le deuxième réactif de fonctionnalisation présente la formule V

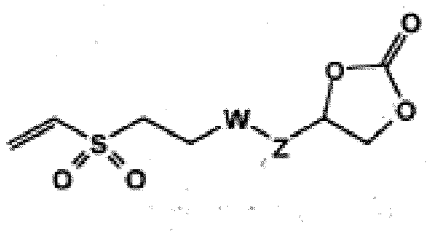

V

dans laquelle W représente 0 ou NH et Z représente un groupe alkylène en $C_1$-$C_{12}$.

**12.** Procédé selon l'une quelconque des revendications 4 à 6, dans lequel le deuxième réactif de fonctionnalisation est choisi parmi des bisépoxydes, des anhydrides d'acides carboxyliques, des acides dicarboxyliques, des diisocyanates et le carbonate de diphényle.

**13.** Procédé selon l'une quelconque des revendications précédentes, dans lequel on traite dans l'étape b) la surface, dans les conditions d'une polymérisation radicalaire ou cationique, par des monomères à insaturation éthylénique, pour obtenir des polymères fixés à la surface.

**14.** Procédé selon l'une quelconque des revendications précédentes, dans lequel on traite dans l'étape b) la surface, dans les conditions d'une réaction de polyaddition ou polycondensation, par des monomères qui sont dotés de groupes réactifs de façon complémentaire vis-à-vis des groupes fonctionnels, pour obtenir des polymères fixés à la surface.

**15.** Procédé selon l'une quelconque des revendications précédentes, dans lequel dans l'étape b) on attache à la surface traitée des oligomères ou polymères qui comportent des groupes réactifs de façon complémentaire vis-à-vis des groupes fonctionnels.

**16.** Procédé selon la revendication 15, dans lequel les oligomères ou polymères sont choisis parmi des polyoxyalkylènes et des polysiloxanes.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 0144383 A
- EP 1541568 A
- BE 671687
- DE 3626662 A
- EP 141269 A
- DE 3604796 A
- US 3422087 A
- EP 0812949 A
- WO 2004056496 A2
- EP 377191 A
- EP 03028224 A
- EP 18259 A


### In der Beschreibung aufgeführte Nicht-Patentliteratur


- **L. UBAGHS ; N. FRICKE ; H. KEUL ; H. HOECKER.** *Macromol. Rapid Commun.,* 2004, vol. 25, 517-521
- **J. F. G. A. JANSEN ; A. A. DIAS ; M. DORSCHU ; B. COUSSENS.** *Macromolecules,* 2003, vol. 36 (11), 3861-3873
- **VON N. PASQUIER ; H. KEUL ; M. MÖLLER.** *Des. Monomers Polym.,* 2005, vol. 8, 679-703